# EUROPEAN PATENT SPECIFICATION

(11) **EP 2 988 437 B1**
(45) Date of publication and mention of the grant of the patent: **01.11.2017**
(21) Application number: 13886278.4
(22) Date of filing: 08.06.2013
(51) Int. Cl.: H04J 11/00, H04B 10/00, H04L 27/26, H04B 10/272, H04Q 11/00

(54) **NETWORK NODE TRANSMISSION METHOD, AND DEVICE AND SYSTEM THEREOF**
NETZWERKKNOTENÜBERTRAGUNGSVERFAHREN SOWIE VORRICHTUNG UND SYSTEM DAFÜR
PROCÉDÉ DE TRANSMISSION DE NOEUD DE RÉSEAU, ET DISPOSITIF ET SYSTÈME ASSOCIÉS

(43) Date of publication of application: 24.02.2016
(73) Proprietor: Huawei Technologies Co., Ltd., Longgang District Shenzhen, Guangdong 518129 (CN)
(72) Inventor: PAN, Zhong, Shenzhen Guangdong 518129 (CN); SUI, Meng, Shenzhen Guangdong 518129 (CN); CHEN, Shicai, Shenzhen Guangdong 518129 (CN); SHI, Cao, Shenzhen Guangdong 518129 (CN)
(74) Representative: Maiwald Patentanwalts GmbH
(86) International application number: PCT/CN2013/077017
(87) International publication number: WO 2014/194532

(56) References cited:
- EP-A1- 2 495 892
- WO-A1-2012/100712
- CN-A- 101 640 820
- CN-A- 102 036 134
- US-A1- 2010 040 372

## Description

### TECHNICAL FIELD

The present invention relates to the communications field, and in particular, to a network node transmission method, apparatus, and system.

### BACKGROUND

Among all technologies that provide higher bandwidth for users, a giga (Giga) digital subscriber line (DSL) becomes the focus of people in the field of gigabit access technologies because of no need to re-deploy cables. Distance restrictions give rise to a system architecture of fiber to the distribution point (Fiber to The Distribution Point, FTTdp), that is, optical fibers are connected to distribution points (Distribution Point, DP), where distribution points are deployed close to users as far as possible.

In the system architecture of FTTdp, a back-to-back access system based on optical orthogonal frequency division multiplexing (Optical Orthogonal Frequency Division Multiplexing, OOFDM) is an emerging access system. On the network side of this access system, in a downlink direction, digital signals that are obtained from downlink data of multiple customer premises equipments (CPEs) through orthogonal frequency division multiplexing (Orthogonal Frequency Division Multiplexing, OFDM) modulation are converted into analog signals and sent to a distribution point unit (Distribution Point Unit, DPU) through an optical fiber. The DPU equipment needs to complete a corresponding OFDM demodulation process to obtain downlink data sent to each CPE, and modulate the downlink data of each CPE to obtain downlink OFDM symbols for each CPE. Each CPE, after receiving the respective downlink OFDM symbol, performs OFDM demodulation to restore the downlink data sent to it. EP 2 495 892 A1 describes a signal processing method, a device, and a system in a passive optical network. The signal processing method in the passive optical network includes: performing baseband encoding processing on a received service signal; modulating the service signal after baseband encoding processing onto allocated orthogonal frequency division multiple access subcarriers through an orthogonal frequency division multiplexing modulation manner. WO 2012/100712A1 describes an optical line terminal, which includes: an optical line terminal control unit configured to divide a downstream data transmission frequency band into a plurality of sub-bands; a serial-to-parallel conversion unit configured to, according to a division of the optical line terminal control unit, and performs a serial-to-parallel conversion on data to be transmitted to obtain data of the plurality of sub-bands, and transmit the data of each sub-band to a corresponding downstream data transmission processing unit.
However, in this method, information transmission requires two sets of OFDM modulation and demodulation. As a result, the complexity is increased and the operation and maintenance costs are high.

### SUMMARY

Embodiments of the present invention provide a network node transmission method, apparatus, system, and optical line terminal (OLT), which can reduce operation and maintenance costs.

In a first aspect, an information transmission method is provided, including: receiving a downlink optical signal sent by an optical line terminal OLT over a downlink optical channel, where the downlink optical signal is obtained through a digital-to-analog conversion and electrical-to-optical conversion performed on a first downlink multiplexing digital signal, and in the first downlink multiplexing digital signal, multiple customer premises equipments (CPEs) correspond to respective OFDM symbol timeslots and/or subcarriers; performing optical-to-electrical conversion and analog-to-digital conversion on the downlink optical signal to obtain a second downlink multiplexing digital signal, demultiplexing the second downlink multiplexing digital signal to obtain downlink OFDM symbols for each CPE of the multiple CPEs, performing digital-to-analog conversion on the downlink OFDM symbols of each CPE to obtain a downlink analog signal of each CPE, and sending the downlink analog signal of each CPE to each CPE over a downlink electrical channel corresponding to each CPE, so that each CPE performs OFDM demodulation on the downlink analog signal to restore the downlink data sent by the OLT.

With reference to the first aspect, in a first possible implementation of the first aspect, the downlink data of each CPE in the first downlink multiplexing digital signal is multiplexed to a symbol timeslot corresponding to each CPE, where different CPEs correspond to different symbol timeslots; and the demultiplexing the second downlink multiplexing digital signal to obtain downlink OFDM symbols of each CPE includes: extracting the downlink OFDM symbols of each CPE from the second downlink multiplexing digital signal in the symbol timeslot corresponding to each CPE.

With reference to the first aspect, in a second possible implementation of the first aspect, the downlink data of each CPE in the first downlink multiplexing digital signal is multiplexed to a subcarrier corresponding to each CPE, where different CPEs correspond to different subcarriers; and the demultiplexing the second downlink multiplexing digital signal to obtain downlink OFDM symbols of each CPE includes: extracting the downlink OFDM symbols of each CPE from the second downlink multiplexing digital signal over the subcarrier corresponding to each CPE.

With reference to the first aspect, in a third possible implementation of the first aspect, the downlink data of each CPE in the first downlink multiplexing digital signal is multiplexed to a predefined subcarrier in a symbol timeslot corresponding to each CPE, where symbol timeslots corresponding to different CPEs are different and/or predefined subcarriers in symbol timeslots corresponding to different CPEs are different; and the demultiplexing the second downlink multiplexing digital signal to obtain downlink OFDM symbols of each CPE of the multiple CPEs includes: extracting the downlink OFDM symbols of each CPE from the second multiplexing digital signal over the predefined subcarrier in the symbol timeslot corresponding to each CPE. With reference to the first aspect or any one of the first to third possible implementations of the first aspect, in a fourth possible implementation of the first aspect, the sending the downlink analog signal of each CPE to each CPE over a downlink electrical channel corresponding to each CPE includes: sending the downlink analog signal of each CPE to each CPE over the downlink electrical channel corresponding to each CPE so that each CPE performs OFDM demodulation on the downlink analog signal to restore the downlink data sent by the OLT, where each CPE, when performing the OFDM demodulation, performs attenuation compensation and phase compensation, with the downlink optical channel and the corresponding downlink electrical channel as a whole.

With reference to the first aspect or any one of the first to fourth possible implementations of the first aspect, in a fifth possible implementation of the first aspect, before sending the downlink analog signal of each CPE to each CPE over the downlink electrical channel corresponding to each CPE, the method further includes: performing filtering and/or power adaptation on a downlink OFDM signal of each CPE and/or the downlink analog signal of each CPE.

With reference to the first aspect or any one of the first to fifth possible implementations of the first aspect, in a sixth possible implementation of the first aspect, the method further includes: receiving an uplink analog signal sent by each CPE over an uplink electrical channel, where the uplink analog signal of each CPE is obtained through OFDM modulation and digital-to-analog conversion performed by each CPE on uplink data sent to the OLT; and performing analog-to-digital conversion on the uplink analog signal of each CPE to obtain uplink OFDM symbols of each CPE, multiplexing the uplink OFDM symbols of each CPE to obtain a first uplink multiplexing digital signal, performing digital-to-analog conversion and electrical-to-optical conversion to obtain an uplink optical signal, and sending the uplink optical signal to the OLT through an uplink optical channel, so that the OLT performs optical-to-electrical conversion and analog-to-digital conversion on the uplink optical signal to obtain a second uplink multiplexing digital signal, and performs demultiplexing and OFDM demodulation on the second uplink multiplexing digital signal to obtain uplink data sent by each CPE.

With reference to the sixth possible implementation of the first aspect, in a seventh possible implementation of the first aspect, the multiplexing the uplink OFDM symbols of each CPE to obtain a first uplink multiplexing digital signal includes: multiplexing the uplink OFDM symbols of each CPE to a symbol timeslot corresponding to each CPE to obtain the first uplink multiplexing digital signal, where different CPEs correspond to different symbol timeslots; and the sending the uplink optical signal to the OLT through an uplink optical channel includes: sending the uplink optical signal to the OLT over the uplink optical channel, so that the OLT performs optical-to-electrical conversion and analog-to-digital conversion on the uplink optical signal to obtain a second uplink multiplexing digital signal, and performs demultiplexing and OFDM demodulation on the second uplink multiplexing digital signal to obtain uplink data sent by each CPE, to restore the uplink data of each CPE in the symbol timeslot corresponding to each CPE.

With reference to the sixth possible implementation of the first aspect, in an eighth possible implementation of the first aspect, the multiplexing the uplink OFDM symbols of each CPE to obtain a first uplink multiplexing digital signal includes: multiplexing the uplink OFDM symbols of each CPE to a subcarrier corresponding to each CPE to obtain the first uplink multiplexing digital signal, where different CPEs correspond to different subcarriers; and the sending the uplink optical signal to the OLT through an uplink optical channel includes: sending the uplink optical signal to the OLT over the uplink optical channel, so that the OLT performs optical-to-electrical conversion and analog-to-digital conversion on the uplink optical signal to obtain a second uplink multiplexing digital signal, and performs demultiplexing and OFDM demodulation on the second uplink multiplexing digital signal to obtain uplink data sent by each CPE, to restore the uplink data of each CPE over the subcarrier corresponding to each CPE. With reference to the sixth possible implementation of the first aspect, in a ninth possible implementation of the first aspect, the multiplexing the uplink OFDM symbols of each CPE to obtain a first uplink multiplexing digital signal includes: multiplexing the uplink OFDM symbols of each CPE to a predefined subcarrier in a symbol timeslot corresponding to each CPE to obtain the first uplink multiplexing digital signal, where symbol timeslots corresponding to different CPEs are different and/or predefined subcarriers in symbol timeslots corresponding to different CPEs are different; and the sending the uplink optical signal to the OLT through an uplink optical channel includes: sending the uplink optical signal to the OLT over the uplink optical channel, so that the OLT performs optical-to-electrical conversion and analog-to-digital conversion on the uplink optical signal to obtain a second uplink multiplexing digital signal, and performs demultiplexing and OFDM demodulation on the second uplink multiplexing digital signal to obtain uplink data sent by each CPE, to restore the uplink data of each CPE over the predefined subcarrier in the symbol timeslot corresponding to each CPE.

With reference to any one of the sixth to ninth possible implementations of the first aspect, in a tenth possible implementation of the first aspect, the sending the uplink optical signal to the OLT through an uplink optical channel includes: sending the uplink optical signal to the OLT over the uplink optical channel, so that the OLT demultiplexes and demodulates the second uplink multiplexing digital signal to obtain uplink data sent by each CPE, where the OLT, when demodulating the second uplink multiplexing digital signal, performs attenuation compensation and phase compensation, with the uplink optical channel and the uplink electrical channel as a whole.

With reference to any one of the sixth to tenth possible implementations of the first aspect, in an eleventh possible implementation of the first aspect, before the sending the uplink optical signal to the OLT over an uplink optical channel, the method further includes: performing filtering and/or power adaptation on the uplink analog signal of each CPE and/or the uplink OFDM symbols of each CPE.

With reference to the first aspect or any one of the first to eleventh possible implementations of the first aspect, the method further includes: receiving configuration information sent by the OLT over a predefined number of logical subchannels in the downlink optical channel; and/or sending status information to the OLT over a predefined number of logical subchannels in the uplink optical channel.

In a second aspect, an information transmission method is provided, including: receiving an uplink analog signal sent by each CPE over an uplink electrical channel, where the uplink analog signal of each CPE is obtained through OFDM modulation and digital-to-analog conversion performed by each CPE on uplink data sent to the OLT; and performing analog-to-digital conversion on the uplink analog signal of each CPE to obtain uplink OFDM symbols of each CPE, multiplexing the uplink OFDM symbols of each CPE to obtain a first uplink multiplexing digital signal, performing digital-to-analog conversion and electrical-to-optical conversion to obtain an uplink optical signal, and sending the uplink optical signal to the OLT through an uplink optical channel, so that the OLT performs optical-to-electrical conversion and analog-to-digital conversion on the uplink optical signal to obtain a second uplink multiplexing digital signal, and performs demultiplexing and OFDM demodulation on the second uplink multiplexing digital signal to obtain uplink data sent by each CPE.

With reference to the second aspect, in a first possible implementation of the second aspect, the multiplexing the uplink OFDM symbols of each CPE to obtain a first uplink multiplexing digital signal includes: multiplexing the uplink OFDM symbols of each CPE to a symbol timeslot corresponding to each CPE to obtain the first uplink multiplexing digital signal, where different CPEs correspond to different symbol timeslots; and the sending the uplink optical signal to the OLT through an uplink optical channel includes: sending the uplink optical signal to the OLT over the uplink optical channel, so that the OLT performs optical-to-electrical conversion and analog-to-digital conversion on the uplink optical signal to obtain a second uplink multiplexing digital signal, and performs demultiplexing and OFDM demodulation on the second uplink multiplexing digital signal to obtain uplink data sent by each CPE, to restore the uplink data of each CPE in the symbol timeslot corresponding to each CPE.

With reference to the second aspect, in a second possible implementation of the second aspect, the multiplexing the uplink OFDM symbols of each CPE to obtain a first uplink multiplexing digital signal includes: multiplexing the uplink OFDM symbols of each CPE to a subcarrier corresponding to each CPE to obtain the first uplink multiplexing digital signal, where different CPEs correspond to different subcarriers; and the sending the uplink optical signal to the OLT through an uplink optical channel includes: sending the uplink optical signal to the OLT over the uplink optical channel, so that the OLT performs optical-to-electrical conversion and analog-to-digital conversion on the uplink optical signal to obtain a second uplink multiplexing digital signal, and performs demultiplexing and OFDM demodulation on the second uplink multiplexing digital signal to obtain uplink data sent by each CPE, to restore the uplink data of each CPE over the subcarrier corresponding to each CPE.

With reference to the second aspect, in a third possible implementation of the second aspect, the multiplexing the uplink OFDM symbols of each CPE to obtain a first uplink multiplexing digital signal includes: multiplexing the uplink OFDM symbols of each CPE to a predefined subcarrier in a symbol timeslot corresponding to each CPE to obtain the first uplink multiplexing digital signal, where symbol timeslots corresponding to different CPEs are different and/or predefined subcarriers in symbol timeslots corresponding to different CPEs are different; and the sending the uplink optical signal to the OLT through an uplink optical channel includes: sending the uplink optical signal to the OLT over the uplink optical channel, so that the OLT performs optical-to-electrical conversion and analog-to-digital conversion on the uplink optical signal to obtain a second uplink multiplexing digital signal, and performs demultiplexing and OFDM demodulation on the second uplink multiplexing digital signal to obtain uplink data sent by each CPE, to restore the uplink data of each CPE over the predefined subcarrier in the symbol timeslot corresponding to each CPE.

With reference to the second aspect or any one of the first to third possible implementations of the second aspect, in a fourth possible implementation of the second aspect, the sending the uplink optical signal to the OLT through an uplink optical channel includes: sending the uplink optical signal to the OLT over the uplink optical channel, so that the OLT demultiplexes and demodulates the second uplink multiplexing digital signal to obtain uplink data sent by each CPE, where the OLT, when demodulating the second uplink multiplexing digital signal, performs attenuation compensation and phase compensation, with the uplink optical channel and the uplink electrical channel as a whole.

With reference to the second aspect or any one of the first to fourth possible implementations of the second aspect, in a fifth possible implementation of the second aspect, before the sending the uplink optical signal to the OLT over an uplink optical channel, the method further includes: performing filtering and/or power adaptation on the uplink analog signal of each CPE and/or the uplink OFDM symbols of each CPE.

In a third aspect, a network device is provided, including: an optical/electrical interface, a downlink analog-to-digital converter, a central processing unit, multiple downlink digital-to-analog converters, and multiple analog circuits that are in a one-to-one relationship with the multiple downlink digital-to-analog converters and in a one-to-one relationship with multiple first devices, where: the optical/electrical interface is configured to receive a downlink optical signal from a downlink optical channel; the downlink analog-to-digital converter is configured to perform analog-to-digital conversion on the downlink optical signal to obtain a second downlink multiplexing digital signal; the central processing unit is configured to demultiplex the second downlink multiplexing digital signal to obtain downlink OFDM symbols for each first device of the multiple first devices, and send the downlink OFDM symbols of each first device to a downlink digital-to-analog converter corresponding to each first device of the multiple downlink digital-to-analog converters; and each digital-to-analog converter of the multiple digital-to-analog converters is configured to perform digital-to-analog conversion on the downlink OFDM symbols corresponding to a first device of the multiple first devices to obtain a downlink analog signal of each first device, and send the downlink analog signal of each first device to each first device over an analog circuit corresponding to each first device of the multiple analog circuits.

With reference to the third aspect, in a first possible implementation of the third aspect, the central processing unit is specifically configured to: extract downlink OFDM symbols of each first device from the second downlink multiplexing digital signal in a symbol timeslot corresponding to each first device, where different first devices correspond to different symbol timeslots; or, extract downlink OFDM symbols of each first device from the second multiplexing digital signal over a subcarrier corresponding to each first device, where different first devices correspond to different subcarriers; or, extract downlink OFDM symbols of each first device from the second multiplexing digital signal in a predefined subcarrier in a symbol timeslot corresponding to each first device, where symbol timeslots corresponding to different first devices are different and/or predefined subcarriers in symbol timeslots corresponding to different first devices are different.

With reference to the third aspect or the first possible implementation of the third aspect, in a second possible implementation of the third aspect, the central processing unit is further configured to perform filtering and/or power adaptation on a downlink OFDM signal of each first device; or, each analog circuit of the multiple analog circuits is further configured to perform filtering and/or power adaptation on the downlink analog signal corresponding to each of the multiple first devices.

With reference to the third aspect, the first possible implementation of the third aspect, or the second possible implementation of the third aspect, in a third possible implementation of the third aspect, the network device further includes multiple uplink analog-to-digital converters that are in a one-to-one relationship with the multiple analog circuits and an uplink digital-to-analog converter, where: each analog circuit of the multiple analog circuits is configured to receive an uplink analog signal sent by a corresponding first device of the multiple first devices over an uplink electrical channel, and send the uplink analog signal of each first device of the multiple first devices to a corresponding analog-to-digital converter of the multiple analog-to-digital converters; each uplink analog-to-digital converter of the multiple analog-to-digital converters is configured to perform analog-to-digital conversion on the uplink analog signal sent by a corresponding analog circuit of the multiple analog circuits to obtain uplink OFDM symbols of each first device of the multiple first devices, and send the uplink OFDM symbols of each first device to the central processing unit; the central processing unit is configured to multiplex the uplink OFDM symbols of each first device to obtain a first uplink multiplexing digital signal, and send the first uplink multiplexing digital signal to the uplink digital-to-analog converter; the uplink digital-to-analog converter is configured to perform digital-to-analog conversion on the first uplink multiplexing digital signal to obtain an uplink multiplexing analog signal; and the optical/electrical interface is configured to perform electrical-to-optical conversion on the uplink multiplexing analog signal to obtain an uplink optical signal, and send the uplink optical signal over an uplink optical channel.

In a fourth aspect, a network device is provided, including: an optical/electrical interface, an uplink digital-to-analog converter, a central processing unit, multiple uplink analog-to-digital converters, and multiple analog circuits that are in a one-to-one relationship with the multiple uplink analog-to-digital converters and in a one-to-one relationship with multiple first devices, where: each analog circuit of the multiple analog circuits is configured to receive an uplink analog signal sent by a corresponding first device of the multiple first devices over an uplink electrical channel, and send the uplink analog signal of each first device of the multiple first devices to a corresponding analog-to-digital converter of the multiple analog-to-digital converters; each uplink analog-to-digital converter of the multiple uplink analog-to-digital converters is configured to perform analog-to-digital conversion on an uplink analog signal sent by a corresponding analog circuit of the multiple analog circuits to obtain uplink OFDM symbols of each first device of the multiple first devices, and send the uplink OFDM symbols of each first device to the central processing unit; the central processing unit is configured to multiplex the uplink OFDM symbols of each first device to obtain a first uplink multiplexing digital signal, and send the first uplink multiplexing digital signal to the uplink digital-to-analog converter; the uplink digital-to-analog converter is configured to perform digital-to-analog conversion on the first uplink multiplexing digital signal to obtain an uplink multiplexing analog signal; and the optical/electrical interface is configured to perform electrical-to-optical conversion on the uplink multiplexing analog signal to obtain an uplink optical signal, and send the uplink optical signal to the OLT over an uplink optical channel.

With reference to the fourth aspect, in a first possible implementation of the fourth aspect, the central processing unit is specifically configured to: multiplex uplink OFDM symbols of each first device to a symbol timeslot corresponding to each first device to obtain the first uplink multiplexing digital signal, where different first devices correspond to different symbol timeslots; or, multiplex uplink OFDM symbols of each first device to a subcarrier corresponding to each first device to obtain the first uplink multiplexing digital signal, where different first devices correspond to different subcarriers; or, multiplex uplink OFDM symbols of each first device to a predefined subcarrier in a corresponding symbol timeslot to obtain the first uplink multiplexing digital signal, where symbol timeslots corresponding to different first devices are different and/or predefined subcarriers in symbol timeslots corresponding to different first devices are different. With reference to the fourth aspect or the first possible implementation of the fourth aspect, in a second possible implementation of the fourth aspect, the central processing unit is further configured to perform filtering and/or power adaptation on the uplink OFDM symbol of each first device; or, each analog circuit of the multiple analog circuits is further configured to perform filtering and/or power adaptation on the uplink analog signal corresponding to a first device of the multiple first devices.

In a fifth aspect, an optical line terminal is provided, including: a downlink multiplexer, a downlink modulator group, a downlink digital-to-analog converter, and an optical/electrical interface, where: the downlink multiplexer is configured to multiplex downlink data that is sent to each first device of multiple first devices, to obtain multiplexed downlink data, and the downlink modulator group is configured to modulate the multiplexed downlink data to obtain a first downlink multiplexing digital signal; or, the downlink modulator group is configured to perform OFDM modulation on downlink data that is sent to each first device of multiple first devices, to obtain downlink OFDM symbols of each first device, and the downlink multiplexer is configured to multiplex the downlink OFDM symbols of each first device to obtain a first downlink multiplexing digital signal, where downlink data of a first device is multiplexed over a subcarrier in a symbol timeslot in the first downlink multiplexing digital signal; the downlink digital-to-analog converter is configured to perform digital-to-analog conversion on the first downlink multiplexing digital signal to obtain a first downlink analog signal; and the optical/electrical interface is configured to perform electrical-to-optical conversion on the first downlink analog signal to obtain a downlink optical signal, and send the downlink optical signal over a downlink optical channel.

With reference to the fifth aspect, in a first possible implementation of the fifth aspect, when the downlink multiplexer is configured to multiplex downlink data that is sent to each first device of multiple first devices, to obtain multiplexed downlink data, and the downlink modulator group is configured to modulate the multiplexed downlink data to obtain a first downlink multiplexing digital signal, the downlink modulator group includes a downlink modulator, where: the downlink multiplexer is specifically configured to multiplex downlink data of each first device to a symbol timeslot corresponding to each first device, where different first devices correspond to different symbol timeslots; or, the downlink multiplexer is specifically configured to multiplex downlink data of each first device to a subcarrier corresponding to each first device, where different first devices correspond to different subcarriers; or, the downlink multiplexer is specifically configured to multiplex downlink data of each first device to a predefined subcarrier in a symbol timeslot corresponding to each first device, where symbol timeslots corresponding to different first devices are different and/or predefined subcarriers in symbol timeslots corresponding to different first devices are different.

With reference to the fifth aspect, in a second possible implementation of the fifth aspect, when the downlink modulator group is configured to perform OFDM modulation on downlink data that is sent to each first device of multiple first devices, to obtain downlink OFDM symbols of each first device, and the downlink multiplexer is configured to multiplex the downlink OFDM symbols of each first device to obtain a first downlink multiplexing digital signal, the downlink modulator group includes multiple downlink modulators that are in a one-to-one relationship with multiple first devices, and each downlink modulator of the multiple downlink modulators is specifically configured to perform OFDM modulation on corresponding first device downlink data in each first device, to obtain downlink OFDM symbols of each first device, where: the downlink multiplexer is specifically configured to multiplex the downlink OFDM symbols of each first device to a symbol timeslot corresponding to each first device, where different first devices correspond to different symbol timeslots; or the downlink multiplexer is specifically configured to multiplex the downlink OFDM symbols of each first device to a subcarrier corresponding to each first device, where different first devices correspond to different subcarriers; or, the downlink multiplexer is specifically configured to multiplex the downlink OFDM symbols of each first device to a predefined subcarrier in a symbol timeslot corresponding to each first device, where symbol timeslots corresponding to different first devices are different and/or predefined subcarriers in symbol timeslots corresponding to different first devices are different.

With reference to the fifth aspect, the first possible implementation of the fifth aspect or the second possible implementation of the fifth aspect, in a third possible implementation of the fifth aspect, the OLT further includes an uplink analog-to-digital converter, an uplink demultiplexer, and an uplink demodulator group, where: the optical/electrical interface is configured to receive an uplink optical signal sent by a DPU, perform optical-to-electrical conversion on the uplink optical signal to obtain an uplink multiplexing analog signal, and send the uplink multiplexing analog signal to the uplink analog-to-digital converter; the uplink analog-to-digital converter is configured to perform analog-to-digital conversion on the uplink multiplexing analog signal to obtain a second uplink multiplexing digital signal; and, the uplink demultiplexer is configured to demultiplex the uplink multiplexing digital signal to obtain uplink OFDM symbols of each first device, and the uplink demodulator group is configured to demodulate the uplink OFDM symbols of each first device to obtain uplink data of each first device; or, the uplink demodulator group is configured to demodulate the uplink multiplexing digital signal to obtain a demodulated uplink signal, and the demultiplexer is configured to demultiplex the demodulated uplink signal to obtain uplink data of each first device.

In a sixth aspect, an optical line terminal is provided, including: an optical/electrical interface, an uplink analog-to-digital converter, an uplink demultiplexer, and an uplink demodulator group, where: the optical/electrical interface is configured to receive an uplink optical signal, perform optical-to-electrical conversion on the uplink optical signal to obtain an uplink multiplexing analog signal, and send the uplink multiplexing analog signal to the uplink analog-to-digital converter; the uplink analog-to-digital converter is configured to perform analog-to-digital conversion on the uplink multiplexing analog signal to obtain a second uplink multiplexing digital signal; and, the uplink demultiplexer is configured to demultiplex the uplink multiplexing digital signal to obtain uplink OFDM symbols of each first device, and the uplink demodulator group is configured to demodulate the uplink OFDM symbols of each first device to obtain uplink data of each first device; or, the uplink demodulator group is configured to demodulate the uplink multiplexing digital signal to obtain a demodulated uplink digital signal, and the demultiplexer is configured to demultiplex the demodulated uplink digital signal to obtain uplink data of each first device of multiple first devices.

With reference to the sixth aspect, in a first possible implementation of the sixth aspect, when the uplink demultiplexer is configured to demultiplex the second uplink multiplexing digital signal to obtain uplink OFDM symbols of each first device, and the uplink demodulator group is configured to demodulate the uplink OFDM symbols of each first device to obtain uplink data of each first device, the uplink demodulator group includes multiple uplink demodulators that are in a one-to-one relationship with the multiple first devices, and each uplink demodulator of the multiple uplink demodulators is specifically configured to demodulate uplink OFDM symbols of the corresponding demodulator in each first device to obtain uplink data of each first device, where: the uplink demultiplexer is specifically configured to extract uplink OFDM symbols corresponding to each first device from the second uplink multiplexing digital signal in a symbol timeslot corresponding to each first device, where different first devices correspond to different symbol timeslots; or, the uplink demultiplexer is specifically configured to extract uplink OFDM symbols corresponding to each first device from the second uplink multiplexing digital signal over a subcarrier corresponding to each first device, where different first devices correspond to different subcarriers; or, the uplink demultiplexer is specifically configured to extract uplink OFDM symbols corresponding to each first device from the second uplink multiplexing digital signal over a predefined subcarrier in a symbol timeslot corresponding to each first device, where symbol timeslots corresponding to different first devices are different and/or predefined subcarriers in symbol timeslots corresponding to different first devices are different.

With reference to the sixth aspect, in a second possible implementation of the sixth aspect, when the uplink demodulator group is configured to demodulate the second uplink multiplexing digital signal to obtain a demodulated uplink digital signal, and the uplink demultiplexer is configured to demultiplex the demodulated uplink digital signal to obtain uplink data of each first device of multiple first devices, the uplink demodulator group includes an uplink demodulator, where: the uplink demultiplexer is specifically configured to extract uplink data corresponding to each first device from the second uplink multiplexing digital signal in a symbol timeslot corresponding to each first device, where different first devices correspond to different symbol timeslots; or, the uplink demultiplexer is specifically configured to extract uplink data corresponding to each first device from the second uplink multiplexing digital signal over a subcarrier corresponding to each first device, where different first devices correspond to different subcarriers; or, the uplink demultiplexer is specifically configured to extract uplink data corresponding to each first device from the second uplink multiplexing digital signal over a predefined subcarrier in a symbol timeslot corresponding to each first device, where symbol timeslots corresponding to different first devices are different and/or corresponding predefined subcarriers are different.

In a seventh aspect, an information transmission system is provided, including: an optical line terminal OLT, a distribution point unit DPU, and multiple CPEs, where: the optical line terminal OLT is configured to perform OFDM modulation and multiplexing on downlink data sent to the multiple CPEs to obtain a first downlink multiplexing digital signal, where multiple customer premises equipments CPE correspond to respective OFDM symbol timeslots and/or subcarriers in the first downlink multiplexing digital signal, perform digital-to-analog conversion and electrical-to-optical conversion on the first downlink multiplexing digital signal to obtain a downlink optical signal, and send the downlink optical signal to the distribution point unit DPU over a downlink optical channel; the DPU is configured to receive the downlink optical signal, perform optical-to-electrical conversion and analog-to-digital conversion on the downlink optical signal to obtain a second downlink multiplexing digital signal, demultiplex the second downlink multiplexing digital signal to obtain downlink OFDM symbols for each CPE of the multiple CPEs, perform digital-to-analog conversion on the downlink OFDM symbols of each CPE to obtain a downlink analog signal of each CPE, and send the downlink analog signal of each CPE to each CPE over a downlink electrical channel corresponding to each DPU; and each CPE is configured to receive the downlink analog signal from the DPU, and perform OFDM demodulation on the downlink analog signal to restore the downlink data sent by the OLT.

With reference to the seventh aspect, in a first possible implementation of the seventh aspect, the OLT is specifically configured to modulate and multiplex downlink data of the multiple CPEs to obtain the first downlink multiplexing digital signal, where downlink data of each CPE is multiplexed to a symbol timeslot corresponding to each CPE in the first downlink multiplexing digital signal, and different CPEs correspond to different symbol timeslots; and the DPU is specifically configured to extract downlink OFDM symbols of each CPE from the second downlink multiplexing digital signal in a symbol timeslot corresponding to each CPE.

With reference to the seventh aspect, in a second possible implementation of the seventh aspect, the OLT is specifically configured to modulate and multiplex downlink data of the multiple CPEs to obtain the first downlink multiplexing digital signal, where downlink data of each CPE is multiplexed to a subcarrier corresponding to each CPE in the first downlink multiplexing digital signal, and different CPEs correspond to different subcarriers; and the DPU is specifically configured to extract downlink OFDM symbols of each CPE from the second downlink multiplexing digital signal over a subcarrier corresponding to each CPE.

With reference to the seventh aspect, in a third possible implementation of the seventh aspect, the OLT is specifically configured to perform OFDM modulation and multiplexing on downlink data of each CPE to obtain the first downlink multiplexing digital signal, where the downlink data of each CPE in the first downlink multiplexing digital signal is multiplexed to a predefined subcarrier in a symbol timeslot corresponding to each CPE, and symbol timeslots corresponding to different CPEs are different and/or predefined subcarriers in symbol timeslots corresponding to different CPEs are different; and the DPU is specifically configured to demultiplex the second downlink multiplexing digital signal to obtain downlink OFDM symbols for each CPE of the multiple CPEs, including: extracting, by the DPU, downlink OFDM symbols of each CPE from the second downlink multiplexing digital signal over a predefined subcarrier in a symbol timeslot corresponding to each CPE.

With reference to the seventh aspect or any one of the first to third possible implementations of the seventh aspect, in a fourth possible implementation of the seventh aspect, each CPE is specifically configured to, when performing the OFDM demodulation, perform attenuation compensation and phase compensation, with the downlink optical channel and the corresponding downlink electrical channel as a whole.

With reference to the seventh aspect or any one of the first to fourth possible implementations of the seventh aspect, in a fifth possible implementation of the seventh aspect, the DPU is further configured to perform filtering and/or power adaptation on the downlink OFDM signal of each CPE and/or the downlink analog signal of each CPE.

With reference to the seventh aspect or any one of the first to fifth possible implementations of the seventh aspect, in a sixth possible implementation of the seventh aspect, each CPE is further configured to perform OFDM modulation and digital-to-analog conversion on uplink data sent to the OLT to obtain an uplink analog signal, and send the uplink analog signal to the DPU over an uplink electrical channel; the DPU is further configured to receive the uplink analog signal of each CPE, perform analog-to-digital conversion on the uplink analog signal of each CPE to obtain uplink OFDM symbols of each CPE, multiplex the uplink OFDM symbols of each CPE to obtain a first uplink multiplexing digital signal, perform digital-to-analog conversion and electrical-to-optical conversion to obtain an uplink optical signal, and send the uplink optical signal to the OLT over an uplink optical channel; and the OLT is further configured to receive the uplink optical signal, perform optical-to-electrical conversion and analog-to-digital conversion to obtain a second uplink multiplexing digital signal, and perform demultiplexing and OFDM demodulation on the second uplink multiplexing digital signal to obtain uplink data sent by each CPE.

With reference to the sixth possible implementation of the seventh aspect, in a seventh possible implementation of the seventh aspect, the OLT is specifically configured to, when demodulating the second uplink multiplexing digital signal, perform attenuation compensation and phase compensation, with the uplink optical channel and the uplink electrical channel as a whole. With reference to the sixth or seventh possible implementation of the seventh aspect, in an eighth possible implementation of the seventh aspect, the DPU is further configured to perform filtering and/or power adaptation on the uplink analog signal of each CPE and/or the uplink OFDM symbols of each CPE.

With reference to the seventh aspect or any one of the first to eighth possible implementations of the seventh aspect, in a ninth possible implementation of the seventh aspect, the OLT is further configured to send DPU configuration information to the DPU over a predefined number of logical subchannels in the downlink optical channel; and/or, the DPU is further configured to send DPU status information to the OLT over a predefined number of logical subchannels in the uplink optical channel.

In an eighth aspect, an information transmission system is provided, including: multiple CPEs, a DPU, and an OLT, where: each CPE of the multiple CPEs is configured to perform OFDM modulation and digital-to-analog conversion on uplink data sent to the OLT to obtain an uplink analog signal, and send the uplink analog signal to the distribution point unit DPU over an uplink electrical channel; the DPU is configured to receive the uplink analog signal of each CPE, perform analog-to-digital conversion on the uplink analog signal of each CPE to obtain uplink OFDM symbols of each CPE, multiplex the uplink OFDM symbols of each CPE to obtain a first uplink multiplexing digital signal, perform digital-to-analog conversion and electrical-to-optical conversion to obtain an uplink optical signal, and send the uplink optical signal to the OLT over an uplink optical channel; and the OLT is configured to receive the uplink optical signal, perform optical-to-electrical conversion and analog-to-digital conversion to obtain a second uplink multiplexing digital signal, and perform demultiplexing and OFDM demodulation on the second uplink multiplexing digital signal to obtain uplink data sent by each CPE of the multiple CPEs. With reference to the eighth aspect, in a first possible implementation of the eighth aspect, the DPU is specifically configured to multiplex uplink OFDM symbols of each CPE to a symbol timeslot corresponding to each CPE to obtain the first uplink multiplexing digital signal, where different CPEs correspond to different symbol timeslots; and the OLT is specifically configured to demultiplex and demodulate the second uplink multiplexing digital signal, to restore uplink data of each CPE in a symbol timeslot corresponding to each CPE.

With reference to the eighth aspect, in a second possible implementation of the eighth aspect, the DPU is specifically configured to multiplex uplink OFDM symbols of each CPE to a subcarrier corresponding to each CPE to obtain the first uplink multiplexing digital signal, where different CPEs correspond to different subcarriers; and the OLT is specifically configured to demultiplex and demodulate the second uplink multiplexing digital signal, to restore uplink data of each CPE over a subcarrier corresponding to each CPE.

With reference to the eighth aspect, in a third possible implementation of the eighth aspect, the DPU is specifically configured to multiplex uplink OFDM symbols of each CPE to a predefined subcarrier in a corresponding symbol timeslot to obtain the first uplink multiplexing digital signal, where symbol timeslots corresponding to different CPEs are different; and the OLT is specifically configured to demultiplex and demodulate the second uplink multiplexing digital signal, to restore uplink data of each CPE over a predefined subcarrier in a symbol timeslot corresponding to each CPE.

With reference to the eighth aspect or any one of the first to third possible implementations of the eighth aspect, in a fourth possible implementation of the eighth aspect, the OLT is specifically configured to, when demodulating the second uplink multiplexing digital signal, perform attenuation compensation and phase compensation, with the uplink optical channel and the uplink electrical channel as a whole.

With reference to the eighth aspect or any one of the first to fourth possible implementations of the eighth aspect, in a fifth possible implementation of the eighth aspect, the DPU is further configured to perform filtering and/or power adaptation on the uplink analog signal of each CPE and/or the uplink OFDM symbols of each CPE.

Therefore, in embodiments of the present invention, an OLT obtains a first downlink multiplexing digital signal by performing OFDM modulation and multiplexing on downlink data sent to multiple CPEs, where downlink data of one CPE is multiplexed over one subcarrier in one OFDM symbol timeslot, so that a DPU can directly demultiplex a second downlink multiplexing digital signal obtained from the first downlink multiplexing digital signal, to obtain downlink OFDM symbols for each CPE of the multiple CPEs. Therefore, in this information transmission process, only one set of OFDM modulation and demodulation needs to be performed, which can simplify DPU structure and functions, reduce DPU costs and power consumption, and thereby reduce operation and maintenance costs. In addition, in embodiments of the present invention, the OLT transmits the signal over a downlink optical channel after performing digital-to-analog conversion and optical-to-electrical conversion on the first downlink multiplexing digital signal, thereby improving a transmission speed over the downlink optical channel.

### BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of an information transmission method according to an embodiment of the present invention;
FIG. 2 is a schematic flowchart of an information transmission method according to another embodiment of the present invention;
FIG. 3 is a schematic diagram of an information transmission system according to another embodiment of the present invention;
FIG. 4 is schematic diagram of an OLT according to another embodiment of the present invention;
FIG. 5 is a schematic flowchart of an OFDM modulation method according to another embodiment of the present invention;
FIG. 6 is a schematic flowchart of an OFDM demodulation method according to another embodiment of the present invention;
FIG. 7 is schematic diagram of functions of a central processing unit according to another embodiment of the present invention;
FIG. 8 is a schematic flowchart of an information transmission method according to another embodiment of the present invention;
FIG. 9 is schematic diagram of a DPU according to another embodiment of the present invention;
FIG. 10 is schematic diagram of a DPU according to another embodiment of the present invention;
FIG. 11 is schematic diagram of a DPU according to another embodiment of the present invention;
FIG. 12 is schematic diagram of an OLT according to another embodiment of the present invention;
FIG. 13 is schematic diagram of an OLT according to another embodiment of the present invention;
FIG. 14 is schematic diagram of an OLT according to another embodiment of the present invention;
FIG. 15 is schematic diagram of an OLT according to another embodiment of the present invention;
FIG. 16 is schematic diagram of an OLT according to another embodiment of the present invention;
FIG. 17 is schematic diagram of an OLT according to another embodiment of the present invention;
FIG. 18 is schematic diagram of an OLT according to another embodiment of the present invention;
FIG. 19 is a schematic diagram of an information transmission system according to another embodiment of the present invention; and
FIG. 20 is a schematic diagram of an information transmission system according to another embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

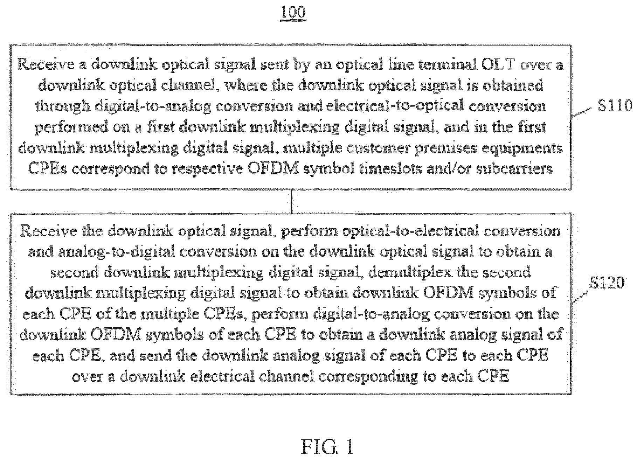

FIG. 1 is a schematic flowchart of an information transmission method 100 according to an embodiment of the present invention. The method is described from the perspective of DPU. As shown in FIG. 1, the method 100 includes the following steps.

S110. Receive a downlink optical signal sent by an optical line terminal (Optical Line Terminal, OLT) over a downlink optical channel, where the downlink optical signal is obtained through digital-to-analog conversion and optical-to-electrical conversion performed on a first downlink multiplexing digital signal, and in the first downlink multiplexing digital signal, multiple customer premises equipments CPE correspond to respective OFDM symbol timeslots and/or subcarriers.

More specifically, the first downlink multiplexing digital signal is obtained after orthogonal frequency division multiplexing OFDM modulation and multiplexing are performed on downlink data that is sent by the OLT to multiple customer premises equipments (CPEs). Downlink data of one CPE is multiplexed over a subcarrier in one OFDM symbol timeslot. S120. Receive the downlink optical signal, perform optical-to-electrical conversion and analog-to-digital conversion on the downlink optical signal to obtain a second downlink multiplexing digital signal, demultiplex the second downlink multiplexing digital signal to obtain downlink OFDM symbols for each CPE of the multiple CPEs, perform digital-to-analog conversion on the downlink OFDM symbols of each CPE to obtain a downlink analog signal of each CPE, and send the downlink analog signal of each CPE to each CPE over a downlink electrical channel corresponding to each CPE, so that each CPE performs OFDM demodulation on the downlink analog signal to restore the downlink data sent by the OLT.

Therefore, in the embodiment of the present invention, an OLT obtains a first downlink multiplexing digital signal by performing OFDM modulation and multiplexing on downlink data sent to multiple CPEs, where downlink data of one CPE is multiplexed over one subcarrier in one OFDM symbol timeslot, so that a DPU can directly demultiplex a second downlink multiplexing digital signal obtained from the first downlink multiplexing digital signal, to obtain downlink OFDM symbols for each CPE of the multiple CPEs. Therefore, in this information transmission process, only one set of OFDM modulation and demodulation needs to be performed, which can simplify DPU structure and functions, reduce DPU costs and power consumption, and thereby reduce operation and maintenance costs. In addition, in the embodiment of the present invention, the OLT transmits the signal over a downlink optical channel after performing digital-to-analog conversion and optical-to-electrical conversion on the first downlink multiplexing digital signal, thereby improving a transmission speed over the downlink optical channel.

In the embodiment of the present invention, performing OFDM modulation and multiplexing on downlink data of each CPE of multiple CPEs may be: modulating the downlink data of each CPE to obtain downlink OFDM symbols of each CPE, and then multiplexing the downlink OFDM symbols of each CPE; it may also be: multiplexing downlink data of each CPE, and then performing OFDM modulation on the multiplexed downlink data.

In the downlink process according to the embodiment of the present invention, the multiplexing and demultiplexing may be OFDM-symbol-based time domain multiplexing and OFDM-symbol-based time domain demultiplexing; may be OFDM-subcarrier-based frequency domain multiplexing and OFDM-subcarrier-based frequency domain demultiplexing; and may also be OFDMA-based multiplexing and OFDMA-based demultiplexing. For ease of understanding, the following describes these three modes.

In the embodiment of the present invention, when multiplexing and demultiplexing are OFDM-symbol-based time domain multiplexing and OFDM-symbol-based time domain demultiplexing respectively, the OLT may modulate downlink data of each CPE of multiple CPEs according to a modulation order and power spectral density (PSD) of each subcarrier corresponding to each CPE, to obtain downlink OFDM symbols of each CPE of the multiple CPEs, and then multiplex the downlink OFDM symbols of each CPE of the multiple CPEs to an OFDM symbol timeslot corresponding to each CPE, to obtain a first downlink multiplexing digital signal; the OLT may also multiplex downlink data of each CPE of multiple CPEs to a symbol timeslot corresponding to each CPE to obtain multiplexed downlink data, where the amount of downlink data in a symbol timeslot corresponding to each CPE is equal to the amount of data that can be carried in each OFDM symbol corresponding to each CPE, and data in each symbol timeslot comes from a CPE corresponding to the symbol timeslot, and then based on OFDM symbols, modulate the multiplexed downlink data according to the modulation order and PSD of each subcarrier corresponding to each CPE, to obtain a first downlink multiplexing digital signal. On the DPU side, the DPU may extract downlink OFDM symbols of each CPE of the multiple CPEs from a second downlink multiplexing digital signal obtained from the first downlink multiplexing digital signal in an OFDM symbol timeslot corresponding to each CPE of the multiple CPEs. Different CPEs may correspond to different symbol timeslots, but different CPE spectrums may be overlapped.

In embodiments of the present invention, when multiplexing and demultiplexing are OFDM-subcarrier-based frequency domain multiplexing and OFDM-subcarrier-based frequency domain demultiplexing respectively, the OLT may multiplex downlink data of each CPE of multiple CPEs according to a sequence of subcarriers corresponding to all CPEs, to obtain multiplexed downlink data corresponding to one OFDM symbol, where the amount of downlink data corresponding to each CPE is equal to the amount of data that can be carried in each OFDM symbol corresponding to each CPE, and then perform OFDM modulation on the multiplexed downlink data to obtain a first downlink multiplexing digital signal, where a modulation order and power spectral density PSD of each subcarrier in each symbol timeslot is equal to a modulation order and power spectral density PSD of each subcarrier of a CPE corresponding to the subcarrier in the symbol timeslot. The OLT may also perform OFDM modulation on downlink data of each CPE of multiple CPEs according to the modulation order and power spectral density PSD, to obtain downlink OFDM symbols of each CPE, then shift a spectrum of the downlink OFDM symbols of each CPE to a subcarrier corresponding to each CPE by using a multiplier and a filter corresponding to each CPE, and adds the signals after the spectrum shift to obtain a first downlink multiplexing digital signal. On the DPU side, the DPU obtains a second downlink multiplexing digital signal from the first downlink multiplexing digital signal, and shifts a spectrum of the second downlink multiplexing digital signal to a baseband by using the multiplier and filter corresponding to each CPE of the multiple CPEs, so as to extract downlink OFDM symbols of each CPE of the multiple CPEs.

In the embodiments of the present invention, when multiplexing and demultiplexing are OFDMA-based multiplexing and OFDMA-based demultiplexing respectively, the OLT may multiplex downlink data of each CPE of multiple CPEs according to a sequence of subcarriers corresponding to each CPE in each symbol timeslot, to obtain multiplexed downlink data, and then perform OFDM modulation on the multiplexed downlink data according to a modulation order and power spectral density PSD of each CPE corresponding to each subcarrier in each symbol timeslot, to obtain a first downlink multiplexing digital signal. The OLT may also perform OFDM modulation on downlink data of each CPE of multiple CPEs according to a modulation order and power spectral density PSD of each subcarrier corresponding to each CPE, to obtain downlink OFDM symbols of each CPE, multiplex the downlink OFDM symbols to a symbol timeslot corresponding to each CPE, and shift a spectrum of the downlink OFDM symbols of each CPE to a subcarrier corresponding to each CPE by using a multiplier and a filter corresponding to each CPE, to obtain a first downlink multiplexing digital signal. On the DPU side, the DPU performs optical-to-electrical conversion and analog-to-digital conversion on the downlink optical signal from the OLT, to obtain a second downlink multiplexing digital signal, shifts a spectrum of the second downlink multiplexing digital signal to a baseband by using a multiplier and a filter corresponding to each CPE of the multiple CPEs, and extracts downlink OFDM symbols of each CPE of the multiple CPEs from a symbol timeslot corresponding to each CPE of the multiple CPEs. Where, symbol timeslots corresponding to different CPEs are different and/or predefined subcarriers in symbol timeslots corresponding to different CPEs are different.

In the embodiments of the present invention, when performing OFDM demodulation, each CPE of multiple CPEs may perform attenuation compensation and phase compensation, with the downlink optical channel and the corresponding downlink electrical channel as a whole.

In the embodiments of the present invention, before the DPU sends a downlink analog signal of each CPE of multiple CPEs to each CPE of the multiple CPEs over a downlink electrical channel corresponding to each CPE of the multiple CPEs, the DPU may further perform filtering and/or power adaptation on the downlink analog signal sent to each CPE of the multiple CPEs and/or the downlink OFDM symbols of each CPE of the multiple CPEs.

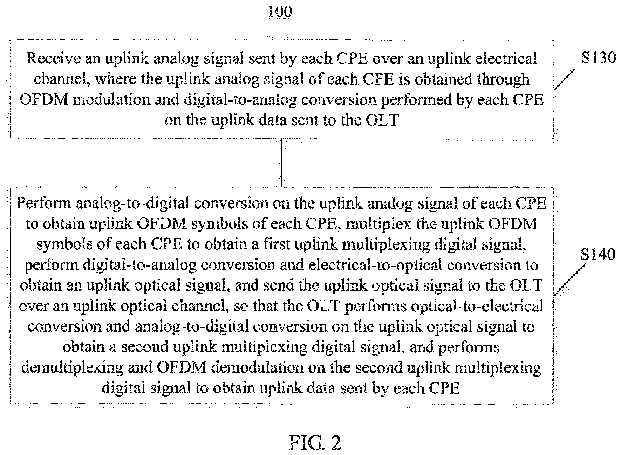

S110 and S120 in the method 100 describe a specific execution method in an uplink transmission direction. The method 100 according to the embodiment of the present invention may further include a specific execution method in a downlink transmission direction illustrated in S130 and S140 in FIG. 2.

In the embodiment of the present invention, as shown in FIG. 2, the method 100 may further include the following:
S130. Receive an uplink analog signal sent by each CPE over an uplink electrical channel, where the uplink analog signal of each CPE is obtained through OFDM modulation and digital-to-analog conversion performed by each CPE on the uplink data sent to the OLT.
S140. Perform analog-to-digital conversion on the uplink analog signal of each CPE to obtain uplink OFDM symbols of each CPE, multiplex the uplink OFDM symbols of each CPE to obtain a first uplink multiplexing digital signal, perform digital-to-analog conversion and electrical-to-optical conversion to obtain an uplink optical signal, and send the uplink optical signal to the OLT over an uplink optical channel, so that the OLT performs optical-to-electrical conversion and analog-to-digital conversion on the uplink optical signal to obtain a second uplink multiplexing digital signal, and performs demultiplexing and OFDM demodulation on the second uplink multiplexing digital signal to obtain uplink data sent by each CPE.

Therefore, in the embodiment of the present invention, the DPU multiplexes the uplink digital signals converted from the uplink analog signals of each CPE of multiple CPEs, to obtain a first uplink multiplexing digital signal, performs digital-to-analog conversion and electrical-to-optical conversion on the first uplink multiplexing digital signal to obtain an uplink optical signal, and sends the uplink optical signal to the OLT; the OLT performs optical-to-electrical conversion and analog-to-digital conversion on the uplink optical signal to obtain a second uplink multiplexing digital signal, and performs demultiplexing and OFDM demodulation on the second uplink multiplexing digital signal to obtain uplink data sent by each CPE of the multiple CPEs. Therefore, in this information transmission process, only one set of OFDM modulation and OFDM demultiplexing is required. In addition, in the embodiment of the present invention, the DPU performs digital-to-analog conversion and electrical-to-optical conversion on the first uplink multiplexing digital signal to obtain an uplink optical signal, and sends the uplink optical signal to the OLT, which can improve a data transmission speed over the uplink optical channel. In the embodiment of the present invention, that the OLT performs multiplexing and demultiplexing on the second uplink multiplexing digital signal may be performing OFDM demodulation on the second uplink multiplexing digital signal first, and then demultiplexing the demodulated signal, or may be demultiplexing the second uplink multiplexing digital signal first to obtain uplink OFDM symbols of each CPE, and then performing OFDM demodulation on the uplink OFDM symbols of each CPE.

In the uplink process according to the embodiment of the present invention, the multiplexing and demultiplexing may be OFDM-symbol-based time domain multiplexing and OFDM-symbol-based time domain demultiplexing; may be OFDM-subcarrier-based frequency domain multiplexing and OFDM-subcarrier-based frequency domain demultiplexing; and may also be OFDMA-based multiplexing and OFDMA-based demultiplexing. For ease of understanding, the following describes these three modes.

In the embodiments of the present invention, when the multiplexing and demultiplexing may be OFDM-symbol-based time domain multiplexing and OFDM-symbol-based time domain demultiplexing respectively, the DPU may perform analog-to-digital conversion on an uplink analog signal from each CPE of multiple CPEs to obtain uplink OFDM symbols of each CPE, and multiplex the uplink OFDM symbols of each CPE to a corresponding symbol timeslot to obtain a first uplink multiplexing digital signal. On the OLT side, after the OLT performs optical-to-electrical conversion and analog-to-digital conversion on the uplink optical signal from the DPU to obtain a second uplink multiplexing digital signal, the OLT may first perform OFDM demodulation on the second uplink multiplexing digital signal, and then extract uplink data of each CPE in a symbol timeslot corresponding to each CPE. The OLT may also demultiplex the second uplink multiplexing digital signal to obtain uplink OFDM symbols corresponding to each CPE in a symbol timeslot corresponding to each CPE, and then demodulate the uplink OFDM symbols corresponding to each CPE to restore uplink data of each CPE. Different CPEs may correspond to different symbol timeslots, but different CPE spectrums may be overlapped. The OFDM demodulation process includes compensation on a channel corresponding to each CPE of the multiple CPEs and demodulation of a corresponding modulation order.

In the embodiments of the present invention, when the multiplexing and demultiplexing may be OFDM-subcarrier-based frequency domain multiplexing and OFDM-subcarrier-based frequency domain demultiplexing respectively, the DPU performs analog-to-digital conversion on an uplink analog signal from each CPE of multiple CPEs to obtain uplink OFDM symbols of each CPE, and shifts a spectrum of the uplink OFDM symbols of each CPE from a baseband to a subcarrier corresponding to each CPE by using a multiplier and a filter corresponding to each CPE of the multiple CPEs, to obtain a first uplink multiplexing digital signal. On the OLT side, after the OLT performs optical-to-electrical conversion and analog-to-digital conversion on the uplink optical signal from the DPU, the OLT may first perform OFDM demodulation on the second uplink multiplexing digital signal according to a modulation order corresponding to each CPE of the multiple CPEs corresponding to each subcarrier, to obtain multiplexed uplink data of the multiple CPEs, and then extract uplink data of each CPE of the multiple CPEs from the multiplexed uplink data according to a sequence of subcarriers corresponding to each CPE. The OLT may also shift a spectrum of the second uplink multiplexing digital signal to a baseband by using a multiplier and a filter corresponding to each CPE, to extract uplink OFDM symbols corresponding to each CPE, and then demodulate the uplink OFDM symbols corresponding to each CPE according to a modulation order corresponding to each CPE to restore uplink data of each CPE.

In embodiments of the present invention, when multiplexing and demultiplexing are OFDMA-based multiplexing and OFDMA-based demultiplexing, the DPU may perform analog-to-digital conversion on an uplink analog signal from each CPE of multiple CPEs to obtain uplink OFDM symbols of each CPE of the multiple CPEs, then multiplex the downlink OFDM symbols of each CPE to a symbol timeslot corresponding to each CPE, and shift a spectrum of the uplink OFDM symbols of each CPE of the multiple CPEs from a baseband to a subcarrier corresponding to each CPE by using a multiplier and a filter corresponding to each CPE, to obtain a first uplink multiplexing digital signal. On the OLT side, after the OLT performs optical-to-electrical conversion and analog-to-digital conversion on the uplink optical signal from the DPU, the OLT may first perform OFDM demodulation on the second uplink multiplexing digital signal according to a modulation order of each CPE corresponding to each subcarrier in each OFDM symbol timeslot, to obtain multiplexed uplink data of the multiple CPEs, and then extract uplink data of each CPE of the multiple CPEs from the multiplexed uplink data according to sequences of symbol timeslots and subcarriers corresponding to each CPE. The OLT may also shift a spectrum of the second uplink multiplexing digital signal to a baseband by using a multiplier and a filter corresponding to each CPE, to extract uplink OFDM symbols corresponding to each CPE from a symbol timeslot corresponding to each CPE, and then demodulate the uplink OFDM symbols corresponding to each CPE according to a modulation order corresponding to each CPE to restore uplink data of each CPE.

In embodiments of the present invention, when the OLT demodulates the second uplink multiplexing digital signal, the OLT may perform attenuation compensation and phase compensation, with the uplink optical channel and the uplink electrical channel as a whole.

In embodiments of the present invention, before the DPU sends the uplink optical signal to the OLT over the uplink optical channel, the DPU may further perform filtering and/or power adaptation on an uplink analog signal received from each CPE of the multiple CPEs and/or the uplink digital signal of each CPE of the multiple CPEs.

In embodiments of the present invention, the OLT may send DPU configuration information to the DPU over a predefined number of logical subchannels in the downlink optical channel, and the DPU may send DPU status information to the OLT over a predefined number of logical subchannels in the uplink optical channel. Where, a predefined number of logical subchannels in the optical channel refers to a part of symbol timeslots on the optical channel and/or a part of subcarriers on the optical channel; and DPU configuration information refers to parameters of the DPU that need to be controlled by the OLT, including but not limited to symbol timeslot allocation information, subcarrier allocation information, filter parameters, power adaptation parameters, and symbol synchronization adjustment parameters of each CPE of multiple CPEs. DPU status information refers to status parameters that the DPU needs to report to the OLT, including but not limited to statistic count and alarms.

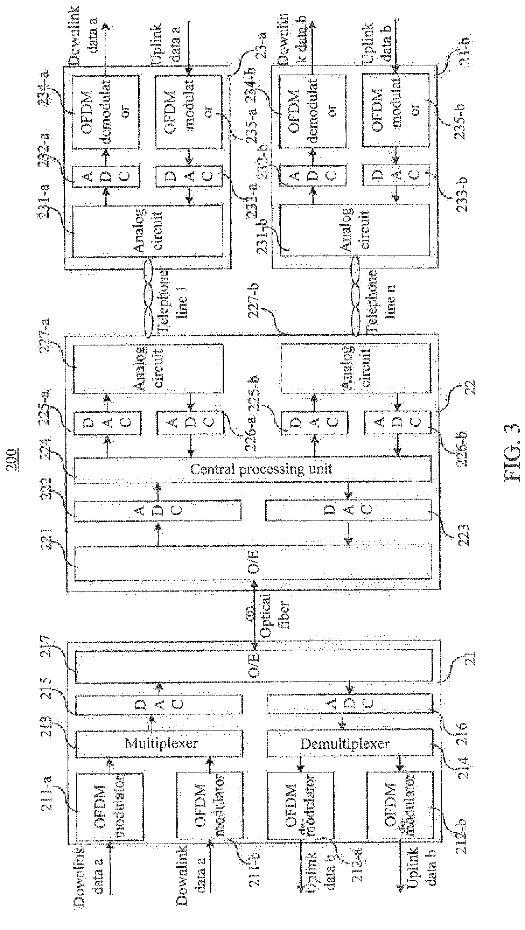

For better understanding, the following describes an information transmission method according to an embodiment of the present invention with reference to an information transmission system 200 illustrated in FIG. 3.

The following first details an information transmission method in a downlink direction.

In the OLT, an OFDM modulator 211-a and an OFDM modulator 211-b perform OFDM modulation on downlink data a of a CPE 23-a and downlink data b of a CPE 23-b respectively, to obtain an OFDM baseband signal for the CPE 23-a and an OFDM baseband signal for the CPE 23-b, and then a multiplexer 213 may multiplex the baseband signal for the CPE 23-a and the baseband signal for the CPE 23-b to obtain a first downlink multiplexing digital signal, where downlink data of only one CPE is multiplexed over one subcarrier in one symbol timeslot, and the multiplexer (MUX) 213 may adopt an OFDM-symbol-based time frequency multiplexing mode, or an OFDM-subcarrier-based frequency domain multiplexing mode, or an OFDMA-based multiplexing mode. Reference may be made to above descriptions for specific implementation modes of multiplexing. A digital-to-analog converter (DAC) 215 performs digital-to-analog conversion on the first downlink multiplexing digital signal to obtain a downlink multiplexing analog signal. An optical/electrical interface (O/E) 217 performs electrical-to-optical conversion on the downlink multiplexing analog signal to obtain a downlink optical signal, and sends the downlink optical signal to a DPU 22 over a downlink optical channel.

In the DPU 22, an optical/electrical interface (O/E) 221 receives the downlink optical signal sent by the OLT, and performs optical-to-electrical conversion on the downlink optical signal to restore a downlink multiplexing analog signal. An analog-to-digital converter (DAC) 222 performs analog-to-digital conversion on the downlink multiplexing analog signal to obtain a second downlink multiplexing digital signal. A central processing unit 224 demultiplexes the second downlink multiplexing digital signal to obtain downlink OFDM symbols for the CPE 23-a and the CPE 23-b. If the multiplexing mode used by the OLT is OFDM-symbol-based time domain multiplexing, the demultiplexing mode used by the central processing unit is OFDM-symbol-based time domain demultiplexing; if the multiplexing mode used by the OLT is OFDM-subcarrier-based frequency domain multiplexing, the demultiplexing mode used by the central processing unit is OFDM-subcarrier-based frequency domain demultiplexing; if the multiplexing mode used by the OLT is OFDMA-based multiplexing, the demultiplexing mode used by the central processing unit is OFDMA-based demultiplexing. The central processing unit sends the OFDM symbols for the CPE 23-a to a DAC 225-a and the OFDM symbols for the CPE 23-b to a DAC 225-b. The DAC 225-a performs digital-to-analog conversion on the downlink OFDM symbols for the CPE 23-a to obtain a downlink analog signal for the CPE 23-a, and sends the downlink analog signal for the CPE 23-a to the CPE 23-a over an analog circuit 227-a. The DAC 225-b performs digital-to-analog conversion on the downlink OFDM symbols for the CPE 23-b to obtain a downlink analog signal for the CPE 23-b, and sends the downlink analog signal for the CPE 23-b to the CPE 23-b over an analog circuit 227-b.

In the CPE 23-a, after an analog circuit 231-a receives the downlink analog signal sent by the DPU, the analog circuit 231-a sends the downlink analog signal to an ADC 232-a, the ADC 232-a performs analog-to-digital conversion on the downlink analog signal to obtain downlink OFDM symbols, and an OFDM demodulator 234-a performs OFDM demodulation on the downlink OFDM symbols to restore downlink data a.

In the CPE 23-b, after an analog circuit 231-b receives the downlink analog signal sent by the DPU, the analog circuit 231-b sends the downlink analog signal to an ADC 232-b, the ADC 232-b performs analog-to-digital conversion on the downlink analog signal to obtain downlink OFDM symbols, and an OFDM demodulator 234-b performs demodulation on the downlink OFDM symbols to restore downlink data b.

The following details an information transmission method in an uplink direction.

In the CPE 23-a, an OFDM modulator 235-a performs OFDM modulation on uplink data a to obtain uplink OFDM symbols, and sends the uplink OFDM symbols to a DAC 233-a. The DAC 233-a performs analog-to-digital conversion on the uplink OFDM symbols from the OFDM modulator 235-a to obtain an uplink analog signal, and sends the uplink analog signal to the DPU 22 through the analog circuit.

In the CPE 23-b, an OFDM modulator 235-b performs OFDM modulation on uplink data b to obtain uplink OFDM symbols, and sends the uplink OFDM symbols to a DAC 233-b. The DAC 233-b performs analog-to-digital conversion on the uplink OFDM symbols from the OFDM modulator 235-b to obtain an uplink analog signal, and sends the uplink analog signal to the DPU 22 through the analog circuit.

In the DPU22, an analog circuit 227-a receives the uplink analog signal from the CPE 23-a over an uplink electrical channel, and sends the uplink analog signal of the CPE 23-a to an ADC 226-a. The ADC 226-a performs analog-to-digital conversion on the uplink analog signal of the CPE 23-a to obtain uplink OFDM symbols of the CPE 23-a, and sends the uplink OFDM symbols of the CPE 23-a to a central processing unit 224. In the DPU22, an analog circuit 227-b receives the uplink analog signal from the CPE 23-b over an uplink electrical channel, and sends the uplink analog signal of the CPE 23-b to an ADC 226-b. The ADC 226-b performs analog-to-digital conversion on the uplink analog signal of the CPE 23-b to obtain uplink OFDM symbols of the CPE 23-b, and sends the uplink OFDM symbols of the CPE 23-b to the central processing unit 224. The central processing unit 224 multiplexes the uplink OFDM symbols of the CPE 23-a and the uplink OFDM symbols of the CPE 23-b to obtain a first uplink multiplexing digital signal, and sends the first uplink multiplexing digital signal to a DAC 223. The DAC 223 performs digital-to-analog conversion on the first uplink multiplexing digital signal to obtain an uplink multiplexing analog signal. The optical/electrical interface 221 performs electrical-to-optical conversion on the uplink analog signal to obtain an uplink optical signal, and sends the uplink optical signal to an OLT 21 over an uplink optical channel.

In the OLT, an optical/electrical interface 217 performs optical-to-electrical conversion on the uplink optical signal to obtain an uplink multiplexing analog signal, and sends the uplink multiplexing analog signal to an ADC 216. The ADC 216 performs analog-to-digital conversion on the uplink multiplexing analog signal to obtain a second uplink multiplexing digital signal, and sends the second uplink multiplexing digital signal to a demultiplexer 214. The demultiplexer 214 demultiplexes the second uplink multiplexing digital signal to obtain uplink OFDM symbols of the CPE 23-a and uplink OFDM symbols of the CPE 23-b, and sends the uplink OFDM symbols of the CPE 23-a to an OFDM demodulator 212-a and the uplink OFDM symbols of the CPE 23-b to an OFDM demodulator 212-b. The OFDM demodulator 212-a demodulates the uplink OFDM symbols of the CPE 23-a to obtain uplink data of the CPE 23-a. The OFDM demodulator 212-b demodulates the uplink OFDM symbols of the CPE 23-b to obtain uplink data of the CPE 23-b.

The analog circuit in embodiments of the present invention may be a 3-port hybrid circuit.

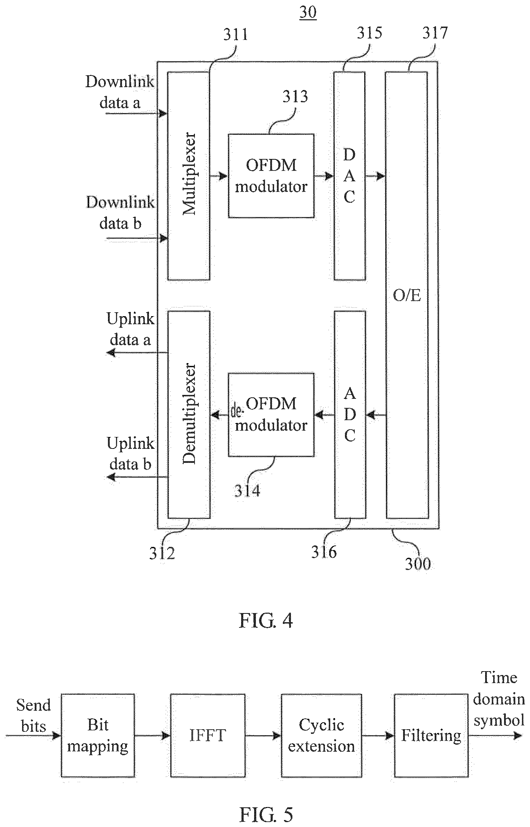

It should be understood that the information transmission system 200 shown in FIG. 3 and the information transmission method described with reference to this system 200 are merely a specific embodiment of the present invention, and the present invention also has other implementations, for example, the OLT 21 in the system 200 may be replaced with an OLT 30 shown in FIG. 4.

In the OLT 30, a multiplexer (MUX) 311, a demultiplexer (DEMUX) 312, an OFDM modulator 313, an OFDM demodulator 314, a digital-to-analog converter 315, an analog-to-digital converter 316, and an optical/electrical interface 317 are included. As seen from the OLT structure, in a downlink direction, the multiplexer 311 first multiplexes downlink data a and downlink data b, and then the OFDM modulator 313 performs OFDM modulation on the multiplexed downlink data to obtain a first downlink multiplexing digital signal. In an uplink direction, the OFDM demodulator 314 first performs OFDM demodulation on a second uplink multiplexing digital signal, and then the demultiplexer 312 extracts uplink data of each CPE from the demodulated signal.

The OFDM modulation described in the embodiment of the present invention may be as illustrated in FIG. 5, that is, an information bit is first mapped to a constellation map coordinate, is modulated through IFFT, and then undergoes cyclic extension and necessary filtering to obtain an OFDM baseband signal, that is, the OFDM symbol described in the present invention.

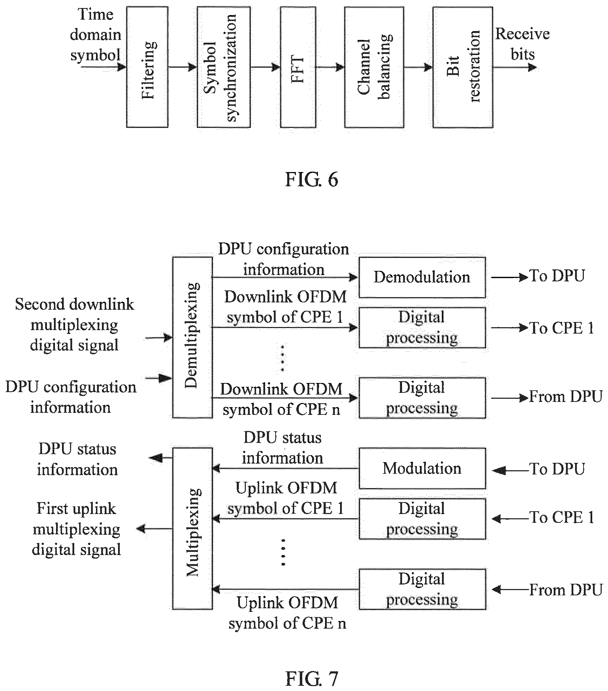

The OFDM demodulation described in the embodiment of the present invention may be as illustrated in FIG. 6, that is, necessary filtering and symbol synchronization are first performed on an OFDM time domain symbol, then FFT computation is performed, a transmitting end signal is recovered from the signal according to a channel estimation result, and a transmitted information bit is recovered according to coordinate mapping.

Functions of the central processing unit in the embodiment of the present invention may be as illustrated in FIG. 7.

In a downlink direction, after a second downlink multiplexing digital signal that is multiplexed with downlink data of CPE 1 to CPE n reaches the central processing unit, the central processing unit may demultiplex the second downlink multiplexing digital signal to obtain downlink OFDM symbols for each CPE, perform necessary digital processing on the downlink OFDM symbols of each CPE, such as filtering and/or power adaptation, and then send the downlink OFDM symbols of each CPE to a corresponding digital-to-analog converter. The OLT may send DPU configuration information to the DPU, where the OLT may multiplex the DPU configuration information with the first downlink multiplexing digital signal and send them to the central processing unit over a downlink optical channel. The central processing unit may demultiplex the second downlink multiplexing digital signal that is multiplexed with the DPU configuration information, to obtain the DPU configuration information and downlink OFDM symbols of each CPE. The DPU configuration information may include symbol timeslot allocation information, subcarrier allocation information, filter parameters, power adaptation parameters, and symbol synchronization adjustment parameters corresponding to each CPE. The central processing unit may first extract the DPU configuration information from the second downlink multiplexing digital signal that is multiplexed with the DPU configuration information, and then perform demultiplexing and subsequent filtering, power adaptation, and the like on the second downlink multiplexing digital signal according to the DPU configuration information. Certainly, the DPU configuration information may also be preconfigured in the central processing unit.

In an uplink direction, the central processing unit may perform digital processing on the uplink OFDM symbols of each CPE, such as filtering and/or power adaptation, and then multiplex the uplink OFDM symbols of each CPE to obtain a first uplink multiplexing digital signal. The central processing unit may send DPU status information to the OLT, where the central processing unit may multiplex the DPU status information with the first uplink multiplexing digital signal and send them to the OLT over an uplink optical channel, and the DPU status information may occupy a small number of subcarriers or symbol timeslots.

It should be understood that the central processing unit according to embodiments of the present invention may also be called another part, which, as long as functions that can be implemented by the foregoing central processing unit can be implemented, shall fall within the protection scope of the present invention.

Therefore, in the embodiment of the present invention, in a downlink direction, an OLT obtains a first downlink multiplexing digital signal by performing OFDM modulation and multiplexing on downlink data sent to multiple CPEs, where downlink data of one CPE is multiplexed in one OFDM symbol timeslot, so that a DPU can directly demultiplex a second downlink multiplexing digital signal obtained from the first downlink multiplexing digital signal, to obtain downlink OFDM symbols for each CPE of the multiple CPEs. Therefore, in this information transmission process, only one set of OFDM modulation and demodulation needs to be performed, which can simplify DPU structure and functions, reduce DPU costs and power consumption, and thereby reduce operation and maintenance costs. In addition, in the embodiment of the present invention, the OLT transmits the signal over a downlink optical channel after performing digital-to-analog conversion and optical-to-electrical conversion on the first downlink multiplexing digital signal, thereby improving a transmission speed over the downlink optical channel. In an uplink direction, the DPU multiplexes the uplink digital signals converted from the uplink analog signals of each CPE of multiple CPEs, to obtain a first uplink multiplexing digital signal, performs digital-to-analog conversion and electrical-to-optical conversion on the first uplink multiplexing digital signal to obtain an uplink optical signal, and sends the uplink optical signal to the OLT; the OLT performs optical-to-electrical conversion and analog-to-digital conversion on the uplink optical signal to obtain a second digital signal, and performs demultiplexing and OFDM demodulation on the second uplink multiplexing digital signal to obtain uplink data sent by each CPE of the multiple CPEs. Therefore, in this information transmission process, only one set of OFDM modulation and OFDM demultiplexing is required. In addition, in the embodiment of the present invention, the DPU performs digital-to-analog conversion and electrical-to-optical conversion on the first uplink multiplexing digital signal to obtain an uplink optical signal, and sends the uplink optical signal to the OLT, which can improve a data transmission speed over the uplink optical channel.

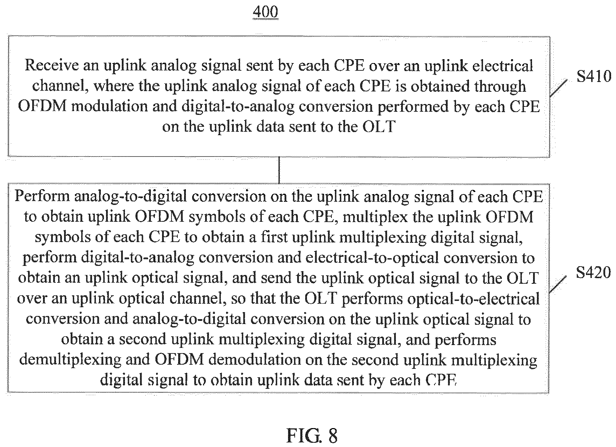

It should be understood that improvements made by embodiments of the present invention in comparison with the prior art may be specific to uplink direction only, may be specific to both uplink direction and downlink direction, and certainly, may also be specific to downlink direction only. FIG 8 illustrates a specific implementation of improvements specific to the downlink direction according to an embodiment of the present invention.

FIG. 8 is a schematic flowchart of an information transmission method according to an embodiment of the present invention. As shown in FIG. 8, the method 400 includes the following steps.

S410. Receive an uplink analog signal sent by each CPE over an uplink electrical channel, where the uplink analog signal of each CPE is obtained through OFDM modulation and digital-to-analog conversion performed by each CPE on the uplink data sent to the OLT.

S420. Perform analog-to-digital conversion on the uplink analog signal of each CPE to obtain uplink OFDM symbols of each CPE, multiplex the uplink OFDM symbols of each CPE to obtain a first uplink multiplexing digital signal, perform digital-to-analog conversion and electrical-to-optical conversion to obtain an uplink optical signal, and send the uplink optical signal to the OLT over an uplink optical channel, so that the OLT performs optical-to-electrical conversion and analog-to-digital conversion on the uplink optical signal to obtain a second uplink multiplexing digital signal, and performs demultiplexing and OFDM demodulation on the second uplink multiplexing digital signal to obtain uplink data sent by each CPE.

In the embodiment of the present invention, that the OLT performs multiplexing and demultiplexing on the second uplink multiplexing digital signal may be performing OFDM demodulation on the second uplink multiplexing digital signal first, and then demultiplexing the demodulated signal, or may be demultiplexing the second uplink multiplexing digital signal first to obtain uplink OFDM symbols of each CPE, and then performing OFDM demodulation on the uplink OFDM symbols of each CPE.

In the uplink process according to the embodiment of the present invention, the multiplexing and demultiplexing may be OFDM-symbol-based time domain multiplexing and OFDM-symbol-based time domain demultiplexing; may be OFDM-subcarrier-based frequency domain multiplexing and OFDM-subcarrier-based frequency domain demultiplexing; and may also be OFDMA-based multiplexing and OFDMA-based demultiplexing. For ease of understanding, the following describes these three modes.

In the embodiments of the present invention, when the multiplexing and demultiplexing may be OFDM-symbol-based time domain multiplexing and OFDM-symbol-based time domain demultiplexing respectively, the DPU may perform analog-to-digital conversion on an uplink analog signal from each CPE of multiple CPEs to obtain uplink OFDM symbols of each CPE, and multiplex the uplink OFDM symbols of each CPE to a corresponding symbol timeslot to obtain a first uplink multiplexing digital signal. On the OLT side, after the OLT performs optical-to-electrical conversion and analog-to-digital conversion on the uplink optical signal from the DPU to obtain a second uplink multiplexing digital signal, the OLT may first perform OFDM demodulation on the second uplink multiplexing digital signal, and then extract uplink data of each CPE in a symbol timeslot corresponding to each CPE. The OLT may also demultiplex the second uplink multiplexing digital signal to obtain uplink OFDM symbols corresponding to each CPE in a symbol timeslot corresponding to each CPE, and then demodulate the uplink OFDM symbols corresponding to each CPE to restore uplink data of each CPE. Different CPEs may correspond to different symbol timeslots, but different CPE spectrums may be overlapped. The OFDM demodulation process includes compensation on a channel corresponding to each CPE of the multiple CPEs and demodulation of a corresponding modulation order.

In the embodiments of the present invention, when the multiplexing and demultiplexing may be OFDM-subcarrier-based frequency domain multiplexing and OFDM-subcarrier-based frequency domain demultiplexing respectively, the DPU performs analog-to-digital conversion on an uplink analog signal from each CPE of multiple CPEs to obtain uplink OFDM symbols of each CPE, and shifts a spectrum of the uplink OFDM symbols of each CPE from a baseband to a subcarrier corresponding to each CPE by using a multiplier and a filter corresponding to each CPE of the multiple CPEs, to obtain a first uplink multiplexing digital signal. On the OLT side, after the OLT performs optical-to-electrical conversion and analog-to-digital conversion on the uplink optical signal from the DPU, the OLT may first perform OFDM demodulation on the second uplink multiplexing digital signal according to a modulation order corresponding to each CPE of the multiple CPEs corresponding to each subcarrier, to obtain multiplexed uplink data of the multiple CPEs, and then extract uplink data of each CPE of the multiple CPEs from the multiplexed uplink data according to a sequence of subcarriers corresponding to each CPE. The OLT may also shift a spectrum of the second uplink multiplexing digital signal to a baseband by using a multiplier and a filter corresponding to each CPE, to extract uplink OFDM symbols corresponding to each CPE, and then demodulate the uplink OFDM symbols corresponding to each CPE according to a modulation order corresponding to each CPE to restore uplink data of each CPE.

In embodiments of the present invention, when multiplexing and demultiplexing are OFDMA-based multiplexing and OFDMA-based demultiplexing, the DPU may perform analog-to-digital conversion on an uplink analog signal from each CPE of multiple CPEs to obtain uplink OFDM symbols of each CPE of the multiple CPEs, then multiplex the downlink OFDM symbols of each CPE to a symbol timeslot corresponding to each CPE, and shift a spectrum of the uplink OFDM symbols of each CPE of the multiple CPEs from a baseband to a subcarrier corresponding to each CPE by using a multiplier and a filter corresponding to each CPE, to obtain a first uplink multiplexing digital signal. On the OLT side, after the OLT performs optical-to-electrical conversion and analog-to-digital conversion on the uplink optical signal from the DPU, the OLT may first perform OFDM demodulation on the second uplink multiplexing digital signal according to a modulation order of each CPE corresponding to each subcarrier in each OFDM symbol timeslot, to obtain multiplexed uplink data of the multiple CPEs, and then extract uplink data of each CPE of the multiple CPEs from the multiplexed uplink data according to sequences of symbol timeslots and subcarriers corresponding to each CPE. The OLT may also shift a spectrum of the second uplink multiplexing digital signal to a baseband by using a multiplier and a filter corresponding to each CPE, to extract uplink OFDM symbols corresponding to each CPE from a symbol timeslot corresponding to each CPE, and then demodulate the uplink OFDM symbols corresponding to each CPE according to a modulation order corresponding to each CPE to restore uplink data of each CPE.

In embodiments of the present invention, when the OLT demodulates the second uplink multiplexing digital signal, the OLT may perform attenuation compensation and phase compensation, with the uplink optical channel and the uplink electrical channel as a whole.

In embodiments of the present invention, before the DPU sends the uplink optical signal to the OLT over the uplink optical channel, the DPU may further perform filtering and/or power adaptation on an uplink analog signal received from each CPE of the multiple CPEs and/or the uplink digital signal of each CPE of the multiple CPEs.

In embodiments of the present invention, the OLT may send DPU configuration information to the DPU over a predefined number of logical subchannels in the downlink optical channel, and the DPU may send DPU status information to the OLT over a predefined number of logical subchannels in the uplink optical channel. Where, a predefined number of logical subchannels in the optical channel refers to a part of symbol timeslots on the optical channel and/or a part of subcarriers on the optical channel; and DPU configuration information refers to parameters of the DPU that need to be controlled by the OLT, including but not limited to symbol timeslot allocation information, subcarrier allocation information, filter parameters, power adaptation parameters, and symbol synchronization adjustment parameters of each CPE of multiple CPEs. DPU status information refers to status parameters that the DPU needs to report to the OLT, including but not limited to statistic count and alarms.

For specific descriptions of the method 400, reference may be made to specific descriptions of the uplink direction of the information transmission method in the method 100.

Therefore, in the embodiment of the present invention, the DPU multiplexes the uplink digital signals converted from the uplink analog signals of each CPE of multiple CPEs, to obtain a first uplink multiplexing digital signal, performs digital-to-analog conversion and electrical-to-optical conversion on the first uplink multiplexing digital signal to obtain an uplink optical signal, and sends the uplink optical signal to the OLT; the OLT performs optical-to-electrical conversion and analog-to-digital conversion on the uplink optical signal to obtain a second digital signal, and performs demultiplexing and OFDM demodulation on the second uplink multiplexing digital signal to obtain uplink data sent by each CPE of the multiple CPEs. Therefore, in this information transmission process, only one set of OFDM modulation and OFDM demultiplexing is required. In addition, in the embodiment of the present invention, the DPU performs digital-to-analog conversion and electrical-to-optical conversion on the first uplink multiplexing digital signal to obtain an uplink optical signal, and sends the uplink optical signal to the OLT, which can improve a data transmission speed over the uplink optical channel.

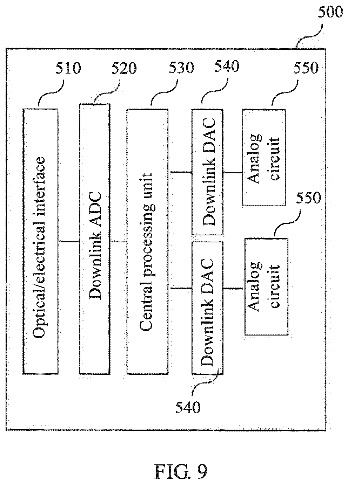

FIG. 9 is a schematic diagram of a network device (a DPU 500 is illustrated in the figure, but the present invention is not limited thereto) according to an embodiment of the present invention. As shown in FIG. 9, the DPU 500 includes an optical/electrical interface 510, a downlink analog-to-digital converter 520, a central processing unit 530, multiple downlink digital-to-analog converters 540, and multiple analog circuits 550 that are in a one-to-one relationship with the multiple downlink digital-to-analog converters 540 and are in a one-to-one relationship with multiple first devices, where:
the optical/electrical interface 510 is configured to receive a downlink optical signal;
the downlink analog-to-digital converter 520 is configured to perform analog-to-digital conversion on the downlink optical signal to obtain a second downlink multiplexing digital signal;
the central processing unit 530 is configured to demultiplex the second downlink multiplexing digital signal to obtain downlink OFDM symbols for each first device of the multiple first devices, and send the downlink OFDM symbols of each first device to downlink digital-to-analog converters corresponding to the first devices of the multiple downlink digital-to-analog converters; and
each digital-to-analog converter 540 of the multiple digital-to-analog converters 540 is configured to perform digital-to-analog conversion on the downlink OFDM symbols corresponding to each first device of the multiple first devices, and send the downlink OFDM symbols corresponding to each first device to each first device over an analog circuit 550 corresponding to each first device of the multiple analog circuits 550.

In the embodiment of the present invention, the central processing unit 530 is specifically configured to:
extract downlink OFDM symbols of each first device from the second downlink multiplexing digital signal in a symbol timeslot corresponding to each first device,
where different first devices correspond to different symbol timeslots; or
extract downlink OFDM symbols of each first device from the second downlink multiplexing digital signal over a subcarrier corresponding to each first device, where different first devices correspond to different subcarriers; or
extract downlink OFDM symbols of each first device from the second downlink multiplexing digital signal over a predefined subcarrier in a symbol timeslot corresponding to each first device, where symbol timeslots corresponding to different first devices are different and/or predefined subcarriers in symbol timeslots corresponding to different first devices are different.

In the embodiment of the present invention, the central processing unit 530 is further configured to:
perform filtering and/or power adaptation on the downlink OFDM signal of each first device; or,
each analog circuit 550 of the multiple analog circuits 550 is further configured to perform filtering and/or power adaptation on a downlink analog signal corresponding to a first device of the multiple first devices.

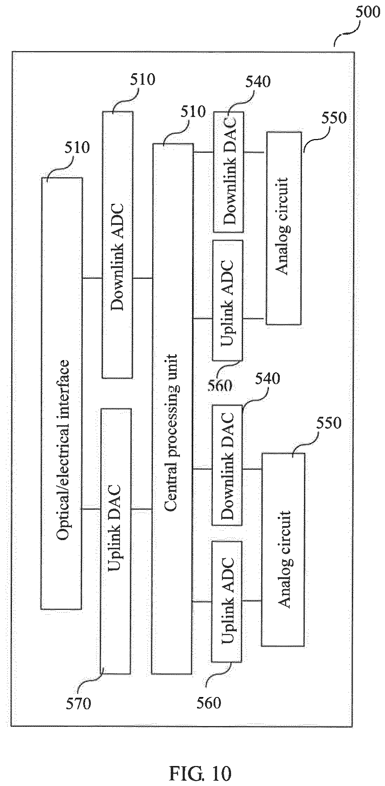

In the embodiment of the present invention, as shown in FIG. 10, the DPU 500 further includes an uplink digital-to-analog converter 570 and multiple uplink analog-to-digital converters 560 that are in a one-to-one relationship with the multiple analog circuits 550, where:
each analog circuit 550 of the multiple analog circuits 550 is configured to receive an uplink analog signal sent by a corresponding first device of the multiple first devices over an uplink electrical channel, and send the uplink analog signal of each first device of the multiple first devices to a corresponding analog-to-digital converter of the multiple analog-to-digital converters;
each uplink analog-to-digital converter 560 of the multiple analog-to-digital converters is configured to perform analog-to-digital conversion on the corresponding uplink analog signal to obtain uplink OFDM symbols of each first device of the multiple first devices, and send the uplink OFDM symbols of each first device to the central processing unit 530;
the central processing unit 530 is configured to multiplex the uplink OFDM symbols of each first device to obtain a first uplink multiplexing digital signal, and send the first uplink multiplexing digital signal to the uplink digital-to-analog converter 570;
the uplink digital-to-analog converter 570 is configured to perform digital-to-analog conversion on the first uplink multiplexing digital signal to obtain an uplink multiplexing analog signal; and
the optical/electrical interface 510 is configured to perform electrical-to-optical conversion on the uplink multiplexing analog signal to obtain an uplink optical signal, and send the uplink optical signal over an uplink optical channel.

It should be understood that the DPU 500 according to the embodiment of the present invention may correspond to the DPU in the information transmission method in the embodiment of the present invention, which is, for brevity, not repeated herein. It should also be understood that the first device according to the embodiment of the present invention may be a CPE.

Therefore, in the embodiment of the present invention, in a downlink direction, a DPU directly demultiplexes the second downlink multiplexing digital signal to obtain downlink OFDM symbols of each first device of the multiple first devices. Therefore, only one set of OFDM modulation and demodulation needs to be performed, which can simplify DPU structure and functions, reduce DPU costs and power consumption, and thereby reduce operation and maintenance costs. In an uplink direction, the DPU multiplexes uplink digital signals converted from uplink analog signals of each first device of multiple first devices, to obtain a first uplink multiplexing digital signal, and performs digital-to-analog conversion and electrical-to-optical conversion on the first uplink multiplexing digital signal to obtain an uplink optical signal. Therefore, in the information transmission process, only one set of OFDM modulation and OFDM demodulation is required. In addition, in the embodiment of the present invention, the DPU performs digital-to-analog conversion and electrical-to-optical conversion on the first uplink multiplexing digital signal to obtain an uplink optical signal, and sends the uplink optical signal, which can improve a data transmission speed over the uplink optical channel.

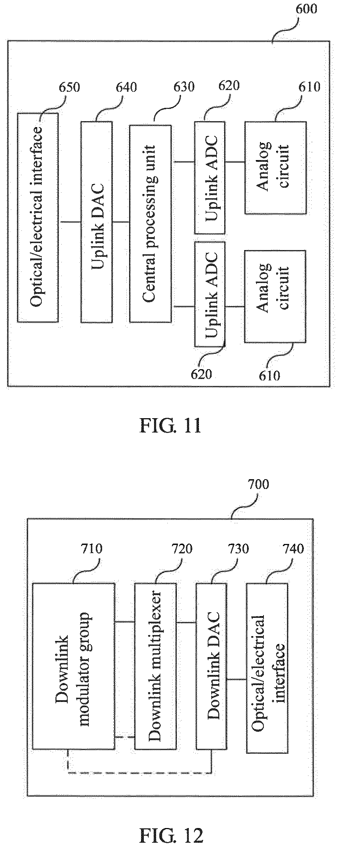

FIG. 11 is a schematic diagram of a network device (a DPU 600 is illustrated in the figure, but the present invention is limited thereto) according to an embodiment of the present invention. As shown in FIG. 11, the DPU 600 includes an optical/electrical interface 650, an uplink digital-to-analog converter 640, a central processing unit 630, multiple uplink analog-to-digital converters 620, and multiple analog circuits 610 that are in a one-to-one relationship with the multiple downlink analog-to-digital converters 620 and are in a one-to-one relationship with multiple first devices, where:
each analog circuit 610 of the multiple analog circuits 610 is configured to receive an uplink analog signal sent by a corresponding first device of the multiple first devices over an uplink electrical channel, and send the uplink analog signal of each first device of the multiple first devices to a corresponding analog-to-digital converter 620 of the multiple analog-to-digital converters 620;
each uplink analog-to-digital converter 620 of the multiple analog-to-digital converters 620 is configured to perform analog-to-digital conversion on the uplink analog signal sent by a corresponding analog circuit 610 of the multiple analog circuits 610, to obtain uplink OFDM symbols of each first device of the multiple first devices, and send the uplink OFDM symbols of each first device to the central processing unit 630;
the central processing unit 630 is configured to multiplex the uplink OFDM symbols of each first device to obtain a first uplink multiplexing digital signal, and send the first uplink multiplexing digital signal to the uplink digital-to-analog converter 640;
the uplink digital-to-analog converter 640 is configured to perform digital-to-analog conversion on the first uplink multiplexing digital signal to obtain an uplink multiplexing analog signal; and
the optical/electrical interface 650 is configured to perform electrical-to-optical conversion on the uplink multiplexing analog signal to obtain an uplink optical signal, and send the uplink optical signal to the OLT over an uplink optical channel.

In the embodiment of the present invention, the central processing unit 630 is specifically configured to:
multiplex the uplink OFDM symbols of each first device to a symbol timeslot corresponding to each CPE to obtain the first uplink multiplexing digital signal, where different first devices correspond to different symbol timeslots; or
multiplex the uplink OFDM symbols of each first device to a subcarrier corresponding to each CPE to obtain the first uplink multiplexing digital signal, where different first devices correspond to different subcarriers; or
multiplex the uplink OFDM symbols of each first device to a predefined subcarrier in a corresponding symbol timeslot to obtain the first uplink multiplexing digital signal, where symbol timeslots corresponding to different first devices are different and/or predefined subcarriers in symbol timeslots corresponding to different first devices are different.

Optionally, in the embodiment of the present invention, the central processing unit 630 is further configured to:
perform filtering and/or power adaptation on the downlink OFDM symbols of each first device; or
each analog circuit 610 of the multiple analog circuits 610 is further configured to perform filtering and/or power adaptation on an uplink analog signal corresponding to a first device of the multiple first devices.

It should be understood that the DPU 600 according to the embodiment of the present invention may correspond to the DPU in the information transmission method in the embodiment of the present invention, which is, for brevity, not repeated herein. It should also be understood that the first device according to the embodiment of the present invention may be a CPE.

Therefore, in the embodiment of the present invention, in the uplink direction, the DPU multiplexes uplink digital signals converted from uplink analog signals of each first device of multiple first devices, to obtain a first uplink multiplexing digital signal, and performs digital-to-analog conversion and electrical-to-optical conversion on the first uplink multiplexing digital signal to obtain an uplink optical signal. Therefore, in the information transmission process, only one set of OFDM modulation and OFDM demodulation is required. In addition, in the embodiment of the present invention, the DPU performs digital-to-analog conversion and electrical-to-optical conversion on the first uplink multiplexing digital signal to obtain an uplink optical signal, and sends the uplink optical signal, which can improve a data transmission speed over the uplink optical channel.

FIG. 12 is a schematic diagram of an OLT 700 according to an embodiment of the present invention. As shown in FIG. 12, the OLT 700 includes a downlink modulator group 710, a downlink multiplexer 720, a downlink digital-to-analog converter 730, and an optical/electrical interface 740, where:
the downlink multiplexer 720 is configured to multiplex downlink data that is sent to each first device of multiple first devices and is not modulated, to obtain multiplexed downlink data, and the downlink modulator group 710 is configured to modulate the multiplexed downlink data to obtain a first downlink multiplexing digital signal; or the downlink modulator group 710 is configured to perform OFDM modulation on downlink data that is sent to each first device of multiple first devices, to obtain downlink OFDM symbols of each first device, and the downlink multiplexer 720 is configured to multiplex the downlink OFDM symbols of each first device to obtain a first downlink multiplexing digital signal, where downlink data of one first device is multiplexed over one subcarrier in one symbol timeslot in the first downlink multiplexing digital signal;
the downlink digital-to-analog converter 730 is configured to perform digital-to-analog conversion on the first downlink multiplexing digital signal to obtain a first downlink analog signal; and
the optical/electrical interface 740 is configured to perform electrical-to-optical conversion on the first downlink analog signal to obtain a downlink optical signal, and send the downlink optical signal over a downlink optical channel.

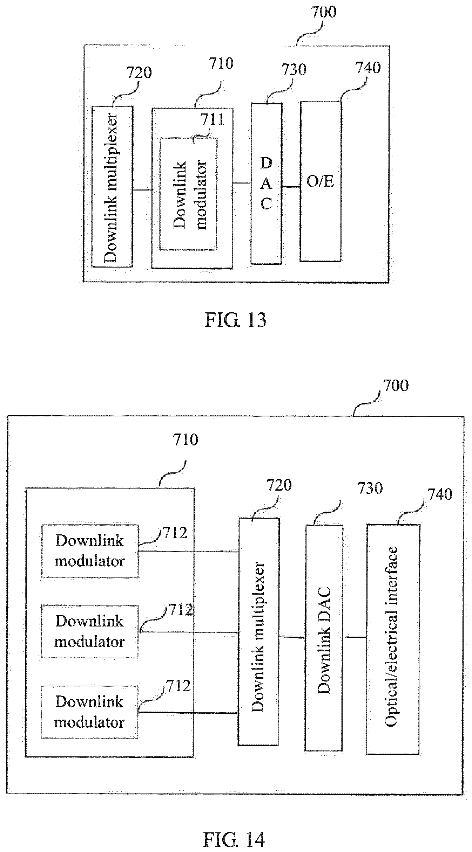

Optionally, as shown in FIG. 13, when the downlink multiplexer 720 is configured to multiplex downlink data that is sent to each first device of multiple first devices and is not modulated, to obtain multiplexed downlink data, and the downlink modulator group 710 is configured to modulate the multiplexed downlink data to obtain a first downlink multiplexing digital signal, the downlink modulator group 710 includes a downlink modulator 711, where:
the downlink multiplexer 720 is specifically configured to multiplex the downlink data of each first device to a symbol timeslot corresponding to each first device, where different first devices correspond to different symbol timeslots; or
the downlink multiplexer 720 is specifically configured to multiplex the downlink data of each first device to a subcarrier corresponding to each first device, where different first devices correspond to different subcarriers; or
the downlink multiplexer 720 is specifically configured to multiplex the downlink data of each first device to a predefined subcarrier in a symbol timeslot corresponding to each first device, where symbol timeslots corresponding to different first devices are different and/or predefined subcarriers in symbol timeslots corresponding to different first devices are different.

Optionally, as shown in FIG. 14, when the downlink modulator group 710 is configured to perform OFDM modulation on downlink data that is sent to each first device of multiple first devices, to obtain downlink OFDM symbols of each first device, and the downlink multiplexer 720 is configured to multiplex the downlink OFDM symbols of each first device to obtain a first downlink multiplexing digital signal, the downlink modulator group 710 includes multiple downlink modulators 712 that are in a one-to-one relationship with the multiple first devices, and each downlink modulator 712 of the multiple downlink modulators 712 is specifically configured to perform OFDM modulation on corresponding first device downlink data in each first device, to obtain downlink OFDM symbols of each first device, where:
the downlink multiplexer 720 is specifically configured to multiplex the downlink OFDM symbols of each first device to a symbol timeslot corresponding to each first device, where different first devices correspond to different symbol timeslots; or
the downlink multiplexer 720 is specifically configured to multiplex the downlink OFDM symbols of each first device to a subcarrier corresponding to each first device, where different first devices correspond to different subcarrier; or
the downlink multiplexer 720 is specifically configured to multiplex the downlink OFDM symbols of each first device to a predefined subcarrier in a symbol timeslot corresponding to each first device, where symbol timeslots corresponding to different first devices are different and/or predefined subcarriers in symbol timeslots corresponding to different first devices are different.

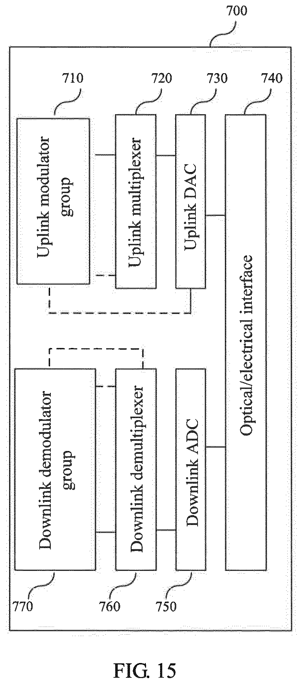

Optionally, as shown in FIG. 15, the OLT may include an uplink analog-to-digital converter 750, an uplink demultiplexer 760, and an uplink demodulator group 770, where:
the optical/electrical interface 740 is configured to receive an uplink optical signal sent by the DPU, perform optical-to-electrical conversion on the uplink optical signal to obtain an uplink multiplexing analog signal, and send the uplink multiplexing analog signal to the uplink analog-to-digital converter 750;
the uplink analog-to-digital converter 750 is configured to perform analog-to-digital conversion on the uplink multiplexing analog signal to obtain a second uplink multiplexing digital signal; and
the uplink demultiplexer 760 is configured to demultiplex the uplink multiplexing digital signal to obtain uplink OFDM symbols of each first device, and the uplink demodulator group 770 is configured to demodulate the uplink OFDM symbols of each first device to obtain uplink data of each first device; or, the uplink demodulator group 770 is configured to demodulate the uplink multiplexing digital signal to obtain a demodulated uplink signal, and the uplink demultiplexer 760 is configured to demultiplex the demodulated uplink signal to obtain uplink data of each first device.

It should be understood that the OLT 700 according to the embodiment of the present invention may correspond to the OLT in the information transmission method in the embodiment of the present invention, which is, for brevity, not repeated herein. It should also be understood that the first device according to the embodiment of the present invention may be a CPE.

Therefore, in the embodiment of the present invention, in a downlink direction, an OLT obtains a first downlink multiplexing digital signal by performing OFDM modulation and multiplexing on downlink data sent to multiple first devices, where downlink data of one first device is multiplexed over one subcarrier of one OFDM symbol timeslot, so that a receiving end can directly demultiplex a second downlink multiplexing digital signal obtained from the first downlink multiplexing digital signal, to obtain downlink OFDM symbols for each first device of the multiple first devices. Therefore, only one set of OFDM modulation and demodulation needs to be performed, which can simplify DPU structure and functions, reduce costs and power consumption, and thereby reduce operation and maintenance costs. In addition, in the embodiment of the present invention, the OLT transmits the signal over a downlink optical channel after performing digital-to-analog conversion and optical-to-electrical conversion on the first downlink multiplexing digital signal, thereby improving a transmission speed over the downlink optical channel. In an uplink direction, the OLT performs optical-to-electrical conversion and analog-to-digital conversion to obtain a second uplink multiplexing digital signal, and performs demultiplexing and OFDM demodulation on the second uplink multiplexing digital signal to obtain uplink data sent by each first device of the multiple first device. Therefore, in the information transmission process, only one set of OFDM modulation and OFDM demodulation is required.

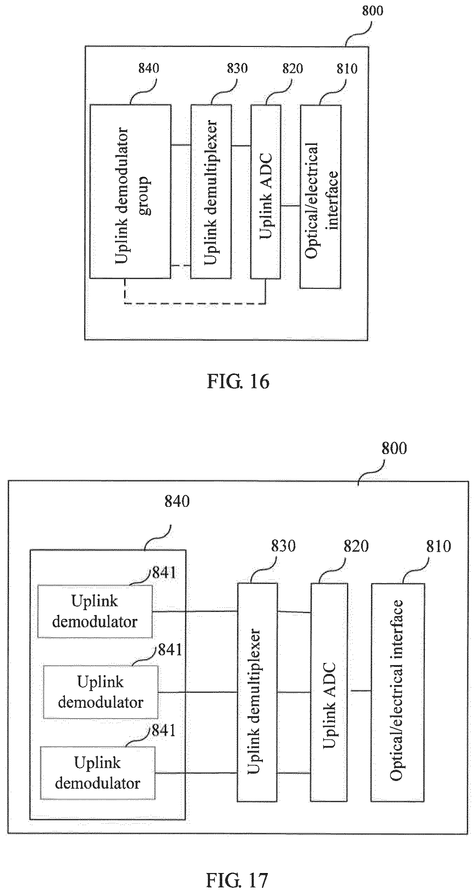

FIG. 16 is a schematic diagram of an OLT 800 according to an embodiment of the present invention. Optionally, as shown in FIG. 16, the OLT 800 may include an optical/electrical interface 810, an uplink analog-to-digital converter 820, an uplink demultiplexer 830, and an uplink demodulator group 840, where:
the optical/electrical interface 810 is configured to receive an uplink optical signal sent by the DPU, perform optical-to-electrical conversion on the uplink optical signal to obtain an uplink multiplexing analog signal, and send the uplink multiplexing analog signal to the uplink analog-to-digital converter 820;
the uplink analog-to-digital converter 820 is configured to perform analog-to-digital conversion on the uplink multiplexing analog to obtain a second uplink multiplexing digital signal; and
the uplink demultiplexer 830 is configured to demultiplex the second uplink multiplexing digital signal to obtain uplink OFDM symbols of each first device, and the uplink demodulator group 840 is configured to demodulate the uplink OFDM symbols of each first device to obtain uplink data of each first device; or, the uplink demodulator group 840 is configured to demodulate the second uplink multiplexing digital signal to obtain a demodulated uplink digital signal, and the demultiplexer 830 is configured to demultiplex the demodulated uplink digital signal to obtain uplink data of each first device of multiple first devices.

Optionally, as shown in FIG. 17, when the uplink demultiplexer 830 is configured to demultiplex the second uplink multiplexing digital signal to obtain uplink OFDM symbols of each first device, and the uplink demodulator group 840 is configured to demodulate the uplink OFDM symbols of each first device to obtain uplink data of each first device, the uplink demodulator group 840 includes multiple uplink demodulators 841 that are in a one-to-one relationship with the multiple first devices, and each uplink demodulator 841 of the multiple uplink demodulators 841 is specifically configured to demodulate uplink OFDM symbols of a corresponding uplink demodulator in each first device to obtain uplink data of each first device, where:
the uplink demultiplexer 830 is specifically configured to extract uplink OFDM symbols of each first device from the second uplink multiplexing digital signal in a symbol timeslot corresponding to each first device, where different first devices correspond to different symbol timeslots; or
the uplink demultiplexer 830 is specifically configured to extract uplink OFDM symbols of each first device from the second uplink multiplexing digital signal over a subcarrier corresponding to each first device, where different first devices correspond to different subcarriers; or
the uplink demultiplexer 830 is specifically configured to extract uplink OFDM symbols of each first device from the second uplink multiplexing digital signal over a predefined subcarrier in a symbol timeslot corresponding to each first device, where symbol timeslots corresponding to different first devices are different and/or predefined subcarriers in symbol timeslots corresponding to different first devices are different.

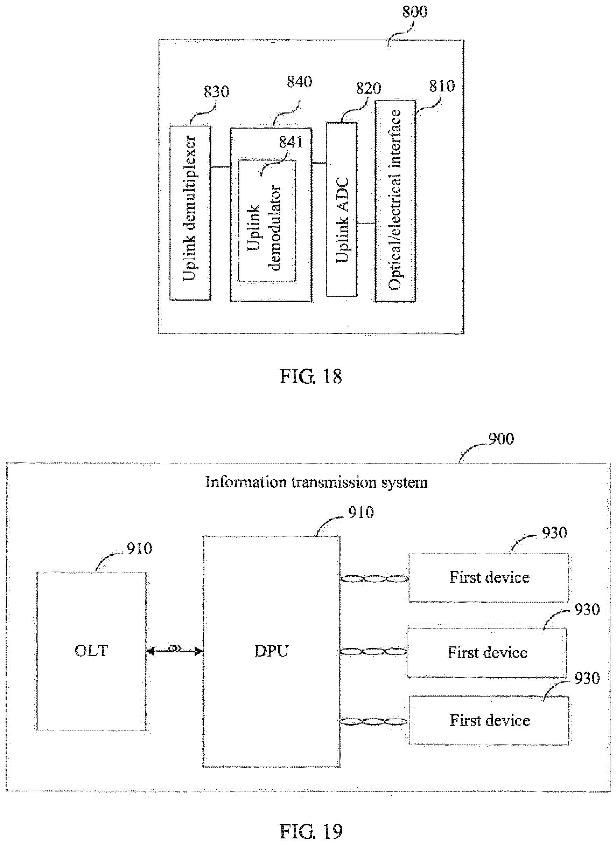

Optionally, as shown in FIG. 18, when the uplink demodulator group 840 is configured to demodulate the second uplink multiplexing digital signal to obtain a demodulated uplink digital signal, and the uplink demultiplexer 830 is configured to demultiplex the demodulated uplink digital signal to obtain uplink data of each first device of multiple first devices, the uplink demodulator group 840 includes an uplink demodulator 842, where:
the uplink demultiplexer 840 is specifically configured to extract uplink data of each first device from the demodulated uplink digital signal in a symbol timeslot corresponding to each first device, where different first devices correspond to different symbol timeslots; or
the uplink demultiplexer 840 is specifically configured to extract the uplink data of each first device from the demodulated uplink digital signal over a subcarrier corresponding to each first device, where different first devices correspond to different subcarriers; or
the uplink demultiplexer 840 is specifically configured to extract the uplink data of each first device from the demodulated uplink digital signal over a predefined subcarrier in a symbol timeslot corresponding to each first device, where symbol timeslots corresponding to different first devices are different and/or predefined subcarriers in symbol timeslots corresponding to different first devices are different.

It should be understood that the OLT 800 according to the embodiment of the present invention may correspond to the OLT in the information transmission method in the embodiment of the present invention, which is, for brevity, not repeated herein. It should also be understood that the first device according to the embodiment of the present invention may be a CPE.

Therefore, in the embodiment of the present invention, in the uplink direction, the OLT performs optical-to-electrical conversion and analog-to-digital conversion to obtain a second uplink multiplexing digital signal, and performs demultiplexing and OFDM demodulation on the second uplink multiplexing digital signal to obtain uplink data sent by each first device of the multiple first device. Therefore, in the information transmission process, only one set of OFDM modulation and OFDM demodulation is required.

FIG. 19 is a schematic block diagram of an information transmission system 900 according to an embodiment of the present invention. As shown in FIG. 19, the system 900 includes an optical line terminal 910, a DPU 920, and multiple first devices 930, where:
the OLT 910 is configured to perform OFDM modulation and multiplexing on downlink data that is sent to multiple first devices 930, to obtain a first downlink multiplexing digital signal, where downlink data of one first device 930 is multiplexed over one subcarrier in one symbol timeslot in the first downlink multiplexing digital signal, perform digital-to-analog conversion and electrical-to-optical conversion on the first downlink multiplexing digital signal to a downlink optical signal, and send the downlink optical signal to the DPU 920 over a downlink optical channel;
the DPU 920 is configured to receive the downlink optical signal, perform optical-to-electrical conversion and analog-to-digital conversion on the downlink optical signal to obtain a second downlink multiplexing digital signal, demultiplex the second downlink multiplexing digital signal to obtain downlink OFDM symbols for each first device 930 of the multiple first devices 930, perform digital-to-analog conversion on the downlink OFDM symbols of each first device 930 to obtain a downlink analog signal of each first device 930, and send the downlink analog signal of each first device 930 to each first device 930 over a downlink electrical channel corresponding to each first device 930; and
each first device 930 is configured to receive the downlink analog signal from the DPU 920, and perform OFDM demodulation on the downlink analog signal to restore downlink data sent by the OLT 910.

Optionally, the OLT 910 is specifically configured to modulate and multiplex the downlink data of the multiple first devices 930 to obtain the first downlink multiplexing digital signal, where the downlink data of each first device 930 is multiplexed in a symbol timeslot corresponding to each first device 930 in the first downlink multiplexing digital signal, and different first devices 930 correspond to different symbol timeslots; and
the DPU 920 is specifically configured to extract the downlink OFDM symbols of each first device 930 from the second downlink multiplexing digital signal in the symbol timeslot corresponding to each first device 930.

Optionally, the OLT 910 is specifically configured to modulate and multiplex the downlink data of the multiple first devices 930 to obtain the first downlink multiplexing digital signal, where the downlink data of each first device 930 is multiplexed over a subcarrier corresponding to each first device 930 in the first downlink multiplexing digital signal, and different first devices 930 correspond to different subcarriers; and
the DPU 920 is specifically configured to extract the downlink OFDM symbols of each first device 930 from the second downlink multiplexing digital signal over the subcarrier corresponding to each first device 930.

Optionally, the OLT 910 is specifically configured to perform OFDM modulation and multiplexing on the downlink data of each first device 930 to obtain the first downlink multiplexing digital signal, where the downlink data of each first device 930 is multiplexed over a predefined subcarrier in a symbol timeslot corresponding to each first device 930 in the first downlink multiplexing digital signal, and symbol timeslots corresponding to different first devices 930 are different and/or predefined subcarriers in symbol timeslots corresponding to different first devices 930 are different; and the DPU 920 is specifically configured to demultiplex the second downlink multiplexing digital signal to obtain downlink OFDM symbols of each first device 930 of the multiple first devices 930, including: extracting, by the DPU 920, the downlink OFDM symbols of each first device 930 from the second multiplexing digital signal over a predefined subcarrier in a symbol timeslot corresponding to each first device 930.

Optionally, each first device 930 is specifically configured to, when performing OFDM demodulation, perform attenuation compensation and phase compensation, with the downlink optical channel and the corresponding downlink electrical channel as a whole.

Optionally, the DPU 920 is further configured to:
perform filtering and/or power adaptation on the downlink OFDM signal of each first device 930 and/or the downlink analog signal of each first device 930.

Optionally, each first device 930 is further configured to perform OFDM modulation and digital-to-analog conversion on uplink data sent to the OLT 910, to obtain an uplink analog signal, and send the uplink analog signal to the DPU 920 over an uplink electrical channel;
the DPU 920 is further configured to receive the uplink analog signal from each first device 930, perform analog-to-digital conversion on the uplink analog signal of each first device 930 to obtain uplink OFDM symbols of each first device 930, multiplex the uplink OFDM symbols of each first device 930 to obtain a first uplink multiplexing digital signal, perform digital-to-analog conversion and electrical-to-optical conversion to obtain an uplink optical signal, and send the uplink optical signal to the OLT 910 over an uplink optical channel; and
the OLT 910 is further configured to receive the uplink optical signal, perform optical-to-electrical conversion and analog-to-digital conversion to obtain a second uplink multiplexing digital signal, and perform demultiplexing and OFDM demodulation on the second uplink multiplexing digital signal to obtain uplink data sent by each first device 930.

Optionally, the OLT 910 is specifically configured to:
when demodulating the second uplink multiplexing digital signal, perform attenuation compensation and phase compensation, with the uplink optical channel and the uplink electrical channel as a whole.

Optionally, the DPU 920 is further configured to:
perform filtering and/or power adaptation on the uplink analog signal of each first device 930 and/or the uplink OFDM symbols of each first device 930.

Optionally, the OLT 910 is further configured to send DPU configuration information 920 to the DPU 920 over a predefined number of logical subchannels in the downlink optical channel; and/or
the DPU 920 is further configured to send DPU status information 920 to the OLT 910 over a predefined number of logical subchannels in the uplink optical channel.

It should be understood that according to the embodiment of the present invention, the OLT 910 may correspond to the OLT in the information transmission methods in the embodiments of the present invention, the DPU 920 may correspond to the DPU in the information transmission methods in the embodiments of the present invention, and the first device 930 may correspond to the CPE in the information transmission methods in the embodiments of the present invention. For brevity, no further details are given herein.

Therefore, in the embodiment of the present invention, in a downlink direction, an OLT obtains a first downlink multiplexing digital signal by performing OFDM modulation and multiplexing on downlink data sent to multiple first devices, where downlink data of one first device is multiplexed over one subcarrier of one OFDM symbol timeslot, so that a DPU can directly demultiplex a second downlink multiplexing digital signal obtained from the first downlink multiplexing digital signal, to obtain downlink OFDM symbols for each first device of the multiple first devices. Therefore, only one set of OFDM modulation and demodulation needs to be performed, which can simplify DPU structure and functions, reduce DPU costs and power consumption, and thereby reduce operation and maintenance costs. In addition, in the embodiment of the present invention, the OLT transmits the signal over a downlink optical channel after performing digital-to-analog conversion and optical-to-electrical conversion on the first downlink multiplexing digital signal, thereby improving a transmission speed over the downlink optical channel. In an uplink direction, the DPU multiplexes the uplink digital signals converted from the uplink analog signals of each first device of multiple first devices, to obtain a first uplink multiplexing digital signal, performs digital-to-analog conversion and electrical-to-optical conversion on the first uplink multiplexing digital signal to obtain an uplink optical signal, and sends the uplink optical signal to the OLT; the OLT performs optical-to-electrical conversion and analog-to-digital conversion on the uplink optical signal to obtain a second uplink multiplexing digital signal, and performs demultiplexing and OFDM demodulation on the second uplink multiplexing digital signal to obtain uplink data sent by each first device of the multiple first devices. Therefore, in this information transmission process, only one set of OFDM modulation and OFDM demultiplexing is required. In addition, in the embodiment of the present invention, the DPU performs digital-to-analog conversion and electrical-to-optical conversion on the first uplink multiplexing digital signal to obtain an uplink optical signal, and sends the uplink optical signal to the OLT, which can improve a data transmission speed over the uplink optical channel.

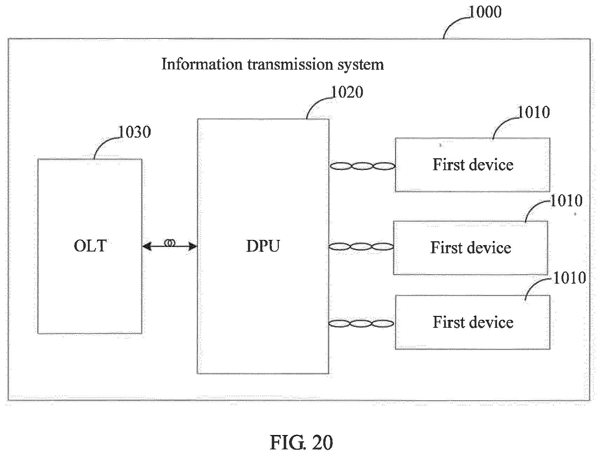

FIG. 20 is a schematic diagram of an information transmission system 1000 according to an embodiment of the present invention. As shown in FIG. 20, the system 100 includes multiple first devices 1010, a DPU 1020, and an OLT 1030, where:
each first device 1010 of multiple first devices 1010 is configured to perform OFDM modulation and digital-to-analog conversion on uplink data sent to the OLT 1030, to obtain an uplink analog signal, and send the uplink analog signal to the distribution point unit DPU 1020 over an uplink electrical channel;
the DPU 1020 is configured to receive the uplink analog signal from each first device 1010, perform analog-to-digital conversion on the uplink analog signal of each first device 1010 to obtain uplink OFDM symbols of each first device 1010, multiplex the uplink OFDM symbols of each first device 1010 to obtain a first uplink multiplexing digital signal, perform digital-to-analog conversion and electrical-to-optical conversion to obtain an uplink optical signal, and send the uplink optical signal to the OLT 1030 over an uplink optical channel; and
the OLT 1030 is configured to receive the uplink optical signal, perform optical-to-electrical conversion and analog-to-digital conversion to obtain a second uplink multiplexing digital signal, and perform demultiplexing and OFDM demodulation on the second uplink multiplexing digital signal to obtain uplink data sent by each first device 1010 of the multiple first devices 1010.

Optionally, the DPU 1020 is specifically configured to multiplex uplink OFDM symbols of each first device 1010 to a symbol timeslot corresponding to each first device 1010 to obtain the first uplink multiplexing digital signal, where different first devices 1010 correspond to different symbol timeslots; and the OLT 1030 is specifically configured to demultiplex and demodulate the second uplink multiplexing digital signal, to restore uplink data of each first device 1010 in a symbol timeslot corresponding to each first device 1010.

Optionally, the DPU 1020 is specifically configured to multiplex uplink OFDM symbols of each first device 1010 to a subcarrier corresponding to each first device 1010 to obtain the first uplink multiplexing digital signal, where different first devices 1010 correspond to different subcarriers; and the OLT 1030 is specifically configured to demultiplex and demodulate the second uplink multiplexing digital signal, to restore uplink data of each first device 1010 over a subcarrier corresponding to each first device 1010.

Optionally, the DPU 1020 is specifically configured to multiplex uplink OFDM symbols of each first device 1010 to a predefined subcarrier in a corresponding symbol timeslot to obtain the first uplink multiplexing digital signal, where symbol timeslots corresponding to different first devices 1010 are different; and the OLT 1030 is specifically configured to demultiplex and demodulate the second uplink multiplexing digital signal, to restore uplink data of each first device 1010 over a predefined subcarrier in a symbol timeslot corresponding to each first device 1010.

Optionally, the OLT 1030 is specifically configured to, when demodulating the second uplink multiplexing digital signal, perform attenuation compensation and phase compensation, with the uplink optical channel and the uplink electrical channel as a whole.

Optionally, the DPU 1020 is further configured to perform filtering and/or power adaptation on the uplink analog signal of each first device 1010 and/or the uplink OFDM symbols of each first device 1010.

It should be understood that according to the embodiment of the present invention, the OLT 1030 may correspond to the OLT in the information transmission methods in the embodiments of the present invention, the DPU 1020 may correspond to the DPU in the information transmission methods in the embodiments of the present invention, and the first device 1010 may correspond to the CPE in the information transmission methods in the embodiments of the present invention.

For brevity, no further details are given herein.

Therefore, in the embodiment of the present invention, the DPU multiplexes the uplink digital signals converted from the uplink analog signals of each first device of multiple first devices, to obtain a first uplink multiplexing digital signal, performs digital-to-analog conversion and electrical-to-optical conversion on the first uplink multiplexing digital signal to obtain an uplink optical signal, and sends the uplink optical signal to the OLT; the OLT performs optical-to-electrical conversion and analog-to-digital conversion on the uplink optical signal to obtain a second uplink multiplexing digital signal, and performs demultiplexing and OFDM demodulation on the second uplink multiplexing digital signal to obtain uplink data sent by each first device of the multiple first devices. Therefore, in this information transmission process, only one set of OFDM modulation and OFDM demultiplexing is required. In addition, in the embodiment of the present invention, the DPU performs digital-to-analog conversion and electrical-to-optical conversion on the first uplink multiplexing digital signal to obtain an uplink optical signal, and sends the uplink optical signal to the OLT, which can improve a data transmission speed over the uplink optical channel.

A person of ordinary skill in the art may be aware that in combination with the examples described in the embodiments disclosed in this specification, units and algorithm steps may be implemented by electronic hardware, or a combination of computer software and electronic hardware. Whether the functions are performed by hardware or software depends on the particular applications and design constraint conditions of the technical solution. A person skilled in the art may use different methods to implement the described functions for each particular application, but it should not be considered that the implementation goes beyond the scope of the present invention.

It may be clearly understood by a person skilled in the art that for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may or may not be physical units, may be located in one position, or may be distributed on a plurality of network units. Some or all of the units may be selected to achieve the objective of the solution of the embodiment according to actual needs.

In addition, functional units in the embodiments of the present invention may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The computer software product is stored in a storage medium, and includes several instructions for instructing a computer device (which may be a personal computer, a server, or a network device) to perform all or a part of the steps of the methods described in the embodiment of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the appended claims.

## Claims

1. A network node transmission method, comprising:
receiving (S110) a downlink optical signal sent by an optical line terminal OLT over a downlink optical channel, wherein the downlink optical signal is obtained through digital-to-analog conversion and electrical-to-optical conversion conversion performed on a first downlink multiplexing digital signal, and in the first downlink multiplexing digital signal, multiple customer premises equipments CPE correspond to respective OFDM symbol timeslots and/or subcarriers; and
performing (S120) optical-to-electrical conversion and analog-to-digital conversion on the downlink optical signal to obtain a second downlink multiplexing digital signal, demultiplexing the second downlink multiplexing digital signal to obtain downlink OFDM symbols for each CPE of the multiple CPEs, performing digital-to-analog conversion on the downlink OFDM symbols of each CPE to obtain a downlink analog signal of each CPE, and sending the downlink analog signal of each CPE to each CPE over a downlink electrical channel corresponding to each CPE.

2. The method according to claim 1, wherein: downlink data of each CPE in the first downlink multiplexing digital signal is multiplexed in a symbol timeslot corresponding to each CPE, wherein different CPEs correspond to different symbol timeslots; and
the demultiplexing the second downlink multiplexing digital signal to obtain downlink OFDM symbols for each CPE in the multiple CPEs comprises: extracting the downlink OFDM symbols of each CPE from the second downlink multiplexing digital signal in the symbol timeslot corresponding to each CPE.

3. The method according to claim 1, wherein: downlink data of each CPE in the first downlink multiplexing digital signal is multiplexed over a subcarrier corresponding to each CPE, wherein different CPEs correspond to different subcarriers; and
the demultiplexing the second downlink multiplexing digital signal to obtain downlink OFDM symbols for each CPE in the multiple CPEs comprises: extracting the downlink OFDM symbols of each CPE from the second downlink multiplexing digital signal over the subcarrier corresponding to each CPE.

4. The method according to claim 1, wherein: downlink data of each CPE in the first downlink multiplexing digital signal is multiplexed on a predefined subcarrier in a symbol timeslot corresponding to each CPE, wherein symbol timeslots corresponding to different CPEs are different and/or predefined subcarriers in symbol timeslots corresponding to different CPEs are different; and
the demultiplexing the second downlink multiplexing digital signal to obtain downlink OFDM symbols for each CPE of the multiple CPEs comprises: extracting the downlink OFDM symbols of each CPE from the second downlink multiplexing digital signal over the predefined subcarrier in the symbol timeslot corresponding to each CPE.

5. The method according to any one of claims 1 to 4, wherein the sending the downlink analog signal of each CPE to each CPE over a downlink electrical channel corresponding to each CPE comprises:
sending the downlink analog signal of each CPE to each CPE over the downlink electrical channel corresponding to each CPE so that each CPE performs OFDM demodulation on the downlink analog signal to restore the downlink data sent by the OLT, wherein each CPE, when performing the OFDM demodulation, performs attenuation compensation and phase compensation, with the downlink optical channel and the corresponding downlink electrical channel as a whole.

6. The method according to any one of claims 1 to 5, wherein: before the downlink analog signal of each CPE is sent to each CPE over a downlink electrical channel corresponding to each CPE, the method further comprises:
performing filtering and/or power adaptation for the downlink OFDM signal of each CPE and/or the downlink analog signal of each CPE.

7. The method according to any one of claims 1 to 6, further comprising:
receiving an uplink analog signal sent by each CPE over an uplink electrical channel, wherein the uplink analog signal of each CPE is obtained through OFDM modulation and digital-to-analog conversion performed by each CPE on the uplink data sent to the OLT; and
performing analog-to-digital conversion on the uplink analog signal of each CPE to obtain uplink OFDM symbols of each CPE, multiplexing the uplink OFDM symbols of each CPE to obtain a first uplink multiplexing digital signal, performing digital-to-analog conversion and electrical-to-optical conversion to obtain an uplink optical signal, and sending the uplink optical signal to the OLT over an uplink optical channel, so that the OLT performs optical-to-electrical conversion and analog-to-digital conversion on the uplink optical signal to obtain a second uplink multiplexing digital signal, and performs demultiplexing and OFDM demodulation on the second uplink multiplexing digital signal to obtain uplink data sent by each CPE.

8. The method according to claim 7, wherein:
the multiplexing the uplink OFDM symbols of each CPE to obtain a first uplink multiplexing digital signal comprises: multiplexing the uplink OFDM symbols of each CPE to a symbol timeslot corresponding to each CPE to obtain the first uplink multiplexing digital signal, wherein different CPEs correspond to different symbol timeslots; and
the sending the uplink optical signal to the OLT over an uplink optical channel comprises: sending the uplink optical signal to the OLT over the uplink optical channel, so that the OLT performs optical-to-electrical conversion and analog-to-digital conversion on the uplink optical signal to obtain a second uplink multiplexing digital signal, and performs demultiplexing and OFDM demodulation on the second uplink multiplexing digital signal to obtain uplink data sent by each CPE, so as to restore the uplink data of each CPE in the symbol timeslot corresponding to each CPE.

9. The method according to claim 7, wherein:
the multiplexing the uplink OFDM symbols of each CPE to obtain a first uplink multiplexing digital signal comprises: multiplexing the uplink OFDM symbols of each CPE to a subcarrier corresponding to each CPE to obtain the first uplink multiplexing digital signal, wherein different CPEs correspond to different subcarriers; and
the sending the uplink optical signal to the OLT over an uplink optical channel comprises: sending the uplink optical signal to the OLT over the uplink optical channel, so that the OLT performs optical-to-electrical conversion and analog-to-digital conversion on the uplink optical signal to obtain a second uplink multiplexing digital signal, and performs demultiplexing and OFDM demodulation on the second uplink multiplexing digital signal to obtain uplink data sent by each CPE, so as to restore the uplink data of each CPE over the subcarrier corresponding to each CPE.

10. The method according to claim 7, wherein:
the multiplexing the uplink OFDM symbols of each CPE to obtain a first uplink multiplexing digital signal comprises: multiplexing the uplink OFDM symbols of each CPE to a predefined subcarrier in a corresponding symbol timeslot to obtain the first uplink multiplexing digital signal, wherein symbol timeslots corresponding to different CPEs are different and/or predefined subcarriers in symbol timeslots corresponding to different CPEs are different; and
the sending the uplink optical signal to the OLT over an uplink optical channel comprises: sending the uplink optical signal to the OLT over the uplink optical channel, so that the OLT performs optical-to-electrical conversion and analog-to-digital conversion on the uplink optical signal to obtain a second uplink multiplexing digital signal, and performs demultiplexing and OFDM demodulation on the second uplink multiplexing digital signal to obtain uplink data sent by each CPE, so as to restore the uplink data of each CPE over the predefined subcarrier in the symbol timeslot corresponding to each CPE.

11. A network device (500), comprising an optical/electrical interface (510), a downlink analog-to-digital converter (520), a central processing unit (530), multiple downlink digital-to-analog converters (540), and multiple analog circuits (550) that are in a one-to-one relationship with the multiple downlink digital-to-analog converters and are in a one-to-one relationship with multiple first devices, wherein:
the optical/electrical interface is configured to receive a downlink optical signal from a downlink optical channel;
the downlink analog-to-digital converter is configured to perform analog-to-digital conversion on the downlink optical signal as received by the optical/electrical interface to obtain a second downlink multiplexing digital signal;
the central processing unit is configured to demultiplex the second downlink multiplexing digital signal to obtain downlink OFDM symbols for each first device of the multiple first devices, and send the downlink OFDM symbols of each first device to downlink digital-to-analog converters corresponding to the first devices of the multiple downlink digital-to-analog converters; and
each digital-to-analog converter of the multiple digital-to-analog converters is configured to perform digital-to-analog conversion on the downlink OFDM symbols corresponding to each first device of the multiple first devices, and send the downlink OFDM symbols corresponding to each first device to each first device over an analog circuit corresponding to each first device of the multiple analog circuits.

12. The network device according to claim 11, wherein the central processing unit is specifically configured to:
extract downlink OFDM symbols for each first device from the second downlink multiplexing digital signal in a symbol timeslot corresponding to each first device, wherein different first devices correspond to different symbol timeslots; or
extract downlink OFDM symbols for each first device from the second downlink multiplexing digital signal over a subcarrier corresponding to each first device, wherein different first devices correspond to different subcarriers; or
extract downlink OFDM symbols for each first device from the second downlink multiplexing digital signal over a predefined subcarrier in a symbol timeslot corresponding to each first device, wherein symbol timeslots corresponding to different first devices are different and/or predefined subcarriers in symbol timeslots corresponding to different first devices are different.

13. The network device according to claim 11 or 12, wherein the central processing unit is further configured to perform filtering and/or power adaptation on the downlink OFDM signal for each first device; or, each analog circuit of the multiple analog circuits is further configured to perform filtering and/or power adaptation on the downlink analog signal for a corresponding first device of the multiple first devices.

14. The network device according to any one of claims 11 to 13, wherein the network device further comprises an uplink digital-to-analog converter and multiple uplink analog-to-digital converters that are in a one-to-one relationship with the multiple analog circuits, wherein:
each analog circuit of the multiple analog circuits is configured to receive an uplink analog signal sent by a corresponding first device of the multiple first devices over an uplink electrical channel, and send the uplink analog signal of each first device of the multiple first devices to a corresponding analog-to-digital converter of the multiple analog-to-digital converters;
each uplink analog-to-digital converter of the multiple analog-to-digital converters is configured to perform analog-to-digital conversion on the uplink analog signal sent by a corresponding analog circuit of the multiple analog circuits, to obtain uplink OFDM symbols from each first device of the multiple first devices, and send the uplink OFDM symbols from each first device to the central processing unit;
the central processing unit is configured to multiplex the uplink OFDM symbols from each first device to obtain a first uplink multiplexing digital signal, and send the first uplink multiplexing digital signal to the uplink digital-to-analog converter;
the uplink digital-to-analog converter is configured to perform digital-to-analog conversion on the first uplink multiplexing digital signal to obtain an uplink multiplexing analog signal; and
the optical/electrical interface is configured to perform electrical-to-optical conversion on the uplink multiplexing analog signal to obtain an uplink optical signal, and send the uplink optical signal over an uplink optical channel.

## Patentansprüche

1. Netzwerkknotenübertragungsverfahren, umfassend:
Empfangen (S110) eines optischen "Downlink"-Signals, das durch ein "Optical Line Terminal" OLT über einen optischen "Downlink"-Kanal gesendet wird, wobei das optische "Downlink"-Signal durch Umsetzung von digital zu analog und Umsetzung von elektrisch zu optisch, die an einem ersten digitalen "Downlink"-Multiplexsignal durchgeführt werden, erhalten wird, und wobei in dem ersten digitalen "Downlink"-Multiplexsignal mehrere Teilnehmernetzgeräte CPE jeweiligen OFDM-Symbolzeitschlitzen und/oder Zwischenträgern entsprechen; und
Durchführen (S120) einer Umsetzung von optisch zu elektrisch und einer Umsetzung von analog zu digital an dem optischen "Downlink"-Signal, um ein zweites digitales "Downlink"-Multiplexsignal zu erhalten, Demultiplexieren des zweiten digitalen "Downlink"-Multiplexsignals, um "Downlink"-OFDM-Symbole für jedes CPE der mehreren CPE zu erhalten, Durchführen einer Umsetzung von digital zu analog an den "Downlink"-OFDM-Symbolen von jedem CPE, um ein analoges "Downlink"-Signal von jedem CPE zu erhalten, und Senden des analogen "Downlink"-Signals von jedem CPE an jedes CPE über einen elektrischen "Downlink"-Kanal, der jedem CPE entspricht.

2. Verfahren nach Anspruch 1, wobei: "Downlink"-Daten von jedem CPE in dem ersten digitalen "Downlink"-Multiplexsignal in einem Symbolzeitschlitz, der jedem CPE entspricht, multiplexiert werden, wobei unterschiedliche CPE unterschiedlichen Symbolzeitschlitzen entsprechen; und wobei
das Demultiplexieren des zweiten digitalen "Downlink"-Multiplexsignals, um "Downlink"-OFDM-Symbole für jedes CPE unter den mehreren CPE zu erhalten, Folgendes umfasst: Extrahieren der "Downlink"-OFDM-Symbole von jedem CPE aus dem zweiten digitalen "Downlink"-Multiplexsignal in dem Symbolzeitschlitz, der jedem CPE entspricht.

3. Verfahren nach Anspruch 1, wobei: "Downlink"-Daten von jedem CPE in dem ersten digitalen "Downlink"-Multiplexsignal über einen Zwischenträger, der jedem CPE entspricht, multiplexiert werden, wobei unterschiedliche CPE unterschiedlichen Zwischenträgern entsprechen; und wobei
das Demultiplexieren des zweiten digitalen "Downlink"-Multiplexsignals, um "Downlink"-OFDM-Symbole für jedes CPE unter den mehreren CPE zu erhalten, Folgendes umfasst: Extrahieren der "Downlink"-OFDM-Symbole von jedem CPE aus dem zweiten digitalen "Downlink"-Multiplexsignal über den Zwischenträger, der jedem CPE entspricht.

4. Verfahren nach Anspruch 1, wobei: "Downlink"-Daten von jedem CPE in dem ersten digitalen "Downlink"-Multiplexsignal auf einem vorbestimmten Zwischenträger in einem Symbolzeitschlitz, der jedem CPE entspricht, multiplexiert werden, wobei Symbolzeitschlitze, die unterschiedlichen CPE entsprechen, unterschiedlich sind und/oder vorbestimmte Zwischenträger in Symbolzeitschlitzen, die unterschiedlichen CPE entsprechen, unterschiedlich sind; und wobei
das Demultiplexieren des zweiten digitalen "Downlink"-Multiplexsignals, um "Downlink"-OFDM-Symbole für jedes CPE der mehreren CPE zu erhalten, Folgendes umfasst: Extrahieren der "Downlink"-OFDM-Symbole von jedem CPE aus dem zweiten digitalen "Downlink"-Multiplexsignal über den vorbestimmten Zwischenträger in dem Symbolzeitschlitz, der jedem CPE entspricht.

5. Verfahren nach einem der Ansprüche 1 bis 4, wobei das Senden des analogen "Downlink"-Signals von jedem CPE an jedes CPE über einen elektrischen "Downlink"-Kanal, der jedem CPE entspricht, Folgendes umfasst:
Senden des analogen "Downlink"-Signals von jedem CPE an jedes CPE über den elektrischen "Downlink"-Kanal, der jedem CPE entspricht, sodass jedes CPE eine OFDM-Demodulation an dem analogen "Downlink"-Signal durchführt, um die "Downlink"-Daten, die durch das OLT gesendet werden, wiederherzustellen, wobei jedes CPE, beim Durchführen der OFDM-Demodulation, eine Dämpfungskompensation und Phasenkompensation an dem optischen "Downlink"-Kanal und dem entsprechenden elektrischen "Downlink"-Kanal insgesamt durchführt.

6. Verfahren nach einem der Ansprüche 1 bis 5, wobei: bevor das analoge "Downlink"-Signal von jedem CPE an jedes CPE über einen elektrischen "Downlink"-Kanal, der jedem CPE entspricht, gesendet wird, das Verfahren ferner Folgendes umfasst:
Durchführen von Filterung und/oder Leistungsanpassung für das "Downlink"-OFDM-Signal von jedem CPE und/oder das analoge "Downlink"-Signal von jedem CPE.

7. Verfahren nach einem der Ansprüche 1 bis 6, ferner umfassend:
Empfangen eines analogen "Uplink"-Signals, das durch jedes CPE über einen elektrischen "Uplink"-Kanal gesendet wird, wobei das analoge "Uplink"-Signal von jedem CPE mittels OFDM-Modulation und Umsetzung von digital zu analog, die durch jedes CPE an den "Uplink"-Daten, die an das OLT gesendet werden, durchgeführt wird, erhalten wird; und
Durchführen einer Umsetzung von analog zu digital an dem analogen "Uplink"-Signal von jedem CPE, um "Uplink"-OFDM-Symbole von jedem CPE zu erhalten, Multiplexieren des "Uplink"-OFDM-Symbols von jedem CPE, um ein erstes digitales "Uplink"-Multiplexsignal zu erhalten, Durchführen einer Umsetzung von digital zu analog und einer Umsetzung von elektrisch zu optisch, um ein optisches "Uplink"-Signal zu erhalten, und Senden des optischen "Uplink"-Signals an das OLT über einen optischen "Uplink"-Kanal, sodass das OLT eine Umsetzung von optisch zu elektrisch und eine Umsetzung von analog zu digital an dem optischen "Uplink"-Signal durchführt, um ein zweites digitales "Uplink"-Multiplexsignal zu erhalten, und Demultiplexierung und OFDM-Demodulation an dem zweiten digitalen "Uplink"-Multiplexsignal durchführt, um "Uplink"-Daten zu erhalten, die durch jedes CPE gesendet werden.

8. Verfahren nach Anspruch 7, wobei:
das Multiplexieren des "Uplink"-OFDM-Symbols von jedem CPE, um ein erstes digitales "Uplink"-Multiplexsignal zu erhalten, Folgendes umfasst: Multiplexieren der "Uplink"-OFDM-Symbole von jedem CPE auf einen Symbolzeitschlitz, der jedem CPE entspricht, um das erste digitale "Uplink"-Multiplexsignal zu erhalten, wobei unterschiedliche CPE unterschiedlichen Symbolzeitschlitzen entsprechen; und das Senden des optischen "Uplink"-Signals an das OLT über einen optischen "Uplink"-Kanal Folgendes umfasst: Senden des optischen "Uplink"-Signals an das OLT über den optischen "Uplink"-Kanal, sodass das OLT eine Umsetzung von optisch zu elektrisch und eine Umsetzung von analog zu digital an dem optischen "Uplink"-Signal durchführt, um ein zweites digitales "Uplink"-Multiplexsignal zu erhalten, und eine Demultiplexierung und OFDM-Demodulation an dem zweiten digitalen "Uplink"-Multiplexsignal durchführt, um "Uplink"-Daten zu erhalten, die durch jedes CPE gesendet werden, um die "Uplink"-Daten von jedem CPE in dem Symbolzeitschlitz, der jedem CPE entspricht, wiederherzustellen.

9. Verfahren nach Anspruch 7, wobei:
das Multiplexieren des "Uplink"-OFDM-Symbols von jedem CPE, um ein erstes digitales "Uplink"-Multiplexsignal zu erhalten, Folgendes umfasst: Multiplexieren der "Uplink"-OFDM-Symbole von jedem CPE auf einen Zwischenträger, der jedem CPE entspricht, um das erste digitale "Uplink"-Multiplexsignal zu erhalten, wobei unterschiedliche CPE unterschiedlichen Zwischenträgern entsprechen; und
das Senden des optischen "Uplink"-Signals an das OLT über einen optischen "Uplink"-Kanal Folgendes umfasst: Senden des optischen "Uplink"-Signals an das OLT über den optischen "Uplink"-Kanal, sodass das OLT eine Umsetzung von optisch zu elektrisch und eine Umsetzung von analog zu digital an dem optischen "Uplink"-Signal durchführt, um ein zweites digitales "Uplink"-Multiplexsignal zu erhalten, und eine Demultiplexierung und OFDM-Demodulation an dem zweiten digitalen "Uplink"-Multiplexsignal durchführt, um "Uplink"-Daten zu erhalten, die durch jedes CPE gesendet werden, um die "Uplink"-Daten von jedem CPE über den Zwischenträger, der jedem CPE entspricht, wiederherzustellen.

10. Verfahren nach Anspruch 7, wobei:
das Multiplexieren des "Uplink"-OFDM-Symbols von jedem CPE, um ein erstes digitales "Uplink"-Multiplexsignal zu erhalten, Folgendes umfasst: Multiplexieren der "Uplink"-OFDM-Symbole von jedem CPE auf einen vorbestimmten Zwischenträger in einem entsprechenden Symbolzeitschlitz, um das erste digitale "Uplink"-Multiplexsignal zu erhalten, wobei Symbolzeitschlitze, die unterschiedlichen CPE entsprechen, unterschiedlich sind und/oder vorbestimmte Zwischenträger in Symbolzeitschlitzen, die unterschiedlichen CPE entsprechen, unterschiedlich sind; und
das Senden des optischen "Uplink"-Signals an das OLT über einen optischen "Uplink"-Kanal Folgendes umfasst: Senden des optischen "Uplink"-Signals an das OLT über den optischen "Uplink"-Kanal, sodass das OLT eine Umsetzung von optisch zu elektrisch und eine Umsetzung von analog zu digital an dem optischen "Uplink"-Signal durchführt, um ein zweites digitales "Uplink"-Multiplexsignal zu erhalten, und eine Demultiplexierung und OFDM-Demodulation an dem zweiten digitalen "Uplink"-Multiplexsignal durchführt, um "Uplink"-Daten zu erhalten, die durch jedes CPE gesendet werden, um die "Uplink"-Daten von jedem CPE über den vorbestimmten Zwischenträger in dem Symbolzeitschlitz, der jedem CPE entspricht, wiederherzustellen.

11. Netzwerkvorrichtung (500), die eine optische/elektrische Schnittstelle (510), einen Analog-zu-digital-"Downlink"-Umsetzer (520), eine zentrale Verarbeitungseinheit (530), mehrere Digital-zu-analog-"Downlink"-Umsetzer (540) und mehre analoge Schaltungen (550), die in einer Eins-zu-eins-Beziehung mit den mehreren Digital-zu-analog-"Downlink"-Umsetzern stehen und in einer Eins-zu-eins-Beziehung mit mehreren ersten Vorrichtungen stehen, wobei:
die optische/elektrische Schnittstelle konfiguriert ist, ein optisches "Downlink"-Signal von einem optischen "Downlink"-Kanal zu empfangen;
der Analog-zu-digital-"Downlink"-Umsetzer konfiguriert ist, eine Umsetzung von analog zu digital an dem optischen "Downlink"-Signal, wie durch die optische/elektrische Schnittstelle empfangen, durchzuführen, um ein zweites digitales "Downlink"-Multiplexsignal zu erhalten;
die zentrale Verarbeitungseinheit konfiguriert ist, das zweite digitale "Downlink"-Multiplexsignal zu demultiplexieren, um "Downlink"-OFDM-Symbole für jede erste Vorrichtung der mehreren ersten Vorrichtungen zu erhalten, und die "Downlink"-OFDM-Symbole von jeder ersten Vorrichtung an Digital-zu-analog-"Downlink"-Umsetzer zu senden, die den ersten Vorrichtungen der mehreren Digital-zu-analog-"Downlink"-Umsetzer entsprechen; und
jeder Digital-zu-analog-Umsetzer der mehreren Digital-zu-analog-Umsetzer konfiguriert ist, eine Umsetzung von digital zu analog an den "Downlink"-OFDM-Symbolen, die jeder ersten Vorrichtung der mehreren ersten Vorrichtungen entsprechen, durchzuführen und die "Downlink"-OFDM-Symbole, die jeder ersten Vorrichtung entsprechen, über eine analoge Schaltung, die jeder ersten Vorrichtung der mehreren analogen Schaltungen entspricht, an jede erste Vorrichtung zu senden.

12. Netzwerkvorrichtung nach Anspruch 11, wobei die zentrale Verarbeitungseinheit speziell konfiguriert ist, um:
"Downlink"-OFDM-Symbole für jede erste Vorrichtung aus dem zweiten digitalen "Downlink"-Multiplexsignal in einem Symbolzeitschlitz, der jeder ersten Vorrichtung entspricht, zu extrahieren, wobei unterschiedliche erste Vorrichtungen unterschiedlichen Symbolzeitschlitzen entsprechen; oder
"Downlink"-OFDM-Symbole für jede erste Vorrichtung aus dem zweiten digitalen "Downlink"-Multiplexsignal über einen Zwischenträger, der jeder ersten Vorrichtung entspricht, zu extrahieren, wobei unterschiedliche erste Vorrichtungen unterschiedlichen Zwischenträgern entsprechen; oder
"Downlink"-OFDM-Symbole für jede erste Vorrichtung aus dem zweiten digitalen "Downlink"-Multiplexsignal über einen vorbestimmten Zwischenträger in einem Symbolzeitschlitz, der jeder ersten Vorrichtung entspricht, zu extrahieren, wobei Symbolzeitschlitze, die unterschiedlichen ersten Vorrichtungen entsprechen, unterschiedlich sind und/oder vorbestimmte Zwischenträger in Symbolzeitschlitzen, die unterschiedlichen ersten Vorrichtungen entsprechen, unterschiedlich sind.

13. Netzwerkvorrichtung nach Anspruch 11 oder 12, wobei die zentrale Verarbeitungseinheit ferner konfiguriert ist, eine Filterung und/oder Leistungsanpassung an dem "Downlink"-OFDM-Signal für jede erste Vorrichtung durchzuführen; oder wobei jede analoge Schaltung der mehreren analogen Schaltungen ferner konfiguriert ist, eine Filterung und/oder Leistungsanpassung an dem analogen "Downlink"-Signal für eine entsprechende erste Vorrichtung der mehreren ersten Vorrichtungen durchzuführen.

14. Netzwerkvorrichtung nach einem der Ansprüche 11 bis 13, wobei die Netzwerkvorrichtung ferner einen Digital-zu-analog-"Uplink"-Umsetzer und mehrere Analog-zu-digital-"Uplink"-Umsetzer aufweist, die in einer Eins-zu-einBeziehung mit den mehreren analogen Schaltungen stehen, wobei:
jede analoge Schaltung der mehreren analogen Schaltungen konfiguriert ist, ein analoges "Uplink"-Signal, das durch eine entsprechende erste Vorrichtung der mehreren ersten Vorrichtungen über einen elektrischen "Uplink"-Kanal gesendet wird, zu empfangen und das analoge "Uplink"-Signal von jeder ersten Vorrichtung der mehreren ersten Vorrichtungen an einen entsprechenden Analog-zu-digital-Umsetzer der mehreren Analog-zu-digital-Umsetzer zu senden;
jeder Analog-zu-digital-"Uplink"-Umsetzer der mehreren Analog-zu-digital-Umsetzer konfiguriert ist, eine Umsetzung von analog zu digital an dem analogen "Uplink"-Signal, das durch eine entsprechende analoge Schaltung der mehreren analogen Schaltungen gesendet wird, durchzuführen, um "Uplink"-OFDM-Symbole von jeder ersten Vorrichtung der mehreren ersten Vorrichtungen zu erhalten, und die "Uplink"-OFDM-Symbole von jeder ersten Vorrichtung an die zentrale Verarbeitungseinheit zu senden;
die zentrale Verarbeitungseinheit konfiguriert ist, die "Uplink"-OFDM-Symbole von jeder ersten Vorrichtung zu multiplexieren, um ein erstes digitales "Uplink"-Multiplexsignal zu erhalten, und das erste digitale "Uplink"-Multiplexsignal an den Digital-zu-analog-"Uplink"-Umsetzer zu senden;
der Digital-zu-analog-"Uplink"-Umsetzer konfiguriert ist, eine Umsetzung von digital zu analog an dem ersten digitalen "Uplink"-Multiplexsignal durchzuführen, um ein analoges "Uplink"-Multiplexsignal zu erhalten; und
die optische/elektrische Schnittstelle konfiguriert ist, eine Umsetzung von elektrisch zu optisch an dem analogen "Uplink"-Multiplexsignal durchzuführen, um ein optisches "Uplink"-Signal zu erhalten, und das optische "Uplink"-Signal über einen optischen "Uplink"-Kanal zu senden.

## Revendications

1. Procédé d'émission de noeud de réseau, comprenant les opérations consistant à :
recevoir (S 110) un signal optique de liaison descendante envoyé par un terminal de ligne optique OLT sur un canal optique de liaison descendante, le signal optique de liaison descendante étant obtenu par une conversion numérique-analogique et une conversion électrique-optique effectuées sur un premier signal numérique de multiplexage de liaison descendante, et dans le premier signal numérique de multiplexage de liaison descendante, des équipements des locaux d'abonné CPE multiples correspondent à des intervalles de temps de symboles OFDM respectifs et/ou des sous-porteuses respectives ; et
effectuer (S120) une conversion optique-électrique et une conversion analogique-numérique sur le signal optique de liaison descendante pour obtenir un deuxième signal numérique de multiplexage de liaison descendante, démultiplexer le deuxième signal numérique de multiplexage de liaison descendante pour obtenir les symboles OFDM de liaison descendante de chaque CPE des CPE multiples, effectuer une conversion numérique-analogique sur les symboles OFDM de liaison descendante de chaque CPE pour obtenir un signal analogique de liaison descendante de chaque CPE, et envoyer le signal analogique de liaison descendante de chaque CPE à chaque CPE sur un canal électrique de liaison descendante correspondant à chaque CPE.

2. Procédé selon la revendication 1, dans lequel : les données de liaison descendante de chaque CPE du premier signal numérique de multiplexage de liaison descendante sont multiplexées dans un intervalle de temps de symboles correspondant à chaque CPE, de telle façon que des CPE différents correspondent à des intervalles de temps différents ; et
le démultiplexage du deuxième signal numérique de multiplexage de liaison descendante effectué pour obtenir les symboles OFDM de liaison descendante de chaque CPE des CPE multiples comprend l'opération consistant à : extraire les symboles OFDM de liaison descendante de chaque CPE depuis le deuxième signal numérique de multiplexage de liaison descendante, dans l'intervalle de temps de symboles correspondant à chaque CPE.

3. Procédé selon la revendication 1, dans lequel : les données de liaison descendante de chaque CPE du premier signal numérique de multiplexage de liaison descendante sont multiplexées sur une sous-porteuse correspondant à chaque CPE, de telle façon que des CPE différents correspondent à des sous-porteuses différentes ; et
le démultiplexage du deuxième signal numérique de multiplexage de liaison descendante effectué pour obtenir les symboles OFDM de liaison descendante de chaque CPE des CPE multiples comprend l'opération consistant à : extraire les symboles OFDM de liaison descendante de chaque CPE depuis le deuxième signal numérique de multiplexage de liaison descendante, sur la sous-porteuse correspondant à chaque CPE.

4. Procédé selon la revendication 1, dans lequel : les données de liaison descendante de chaque CPE du premier signal numérique de multiplexage de liaison descendante sont multiplexées sur une sous-porteuse prédéfinie d'un intervalle de temps de symboles correspondant à chaque CPE, de telle façon que des intervalles de temps de symboles correspondant à des CPE différents soient différents, et/ou que des sous-porteuses prédéfinies des intervalles de temps de symboles correspondant à des CPE différents soient différentes ; et
le démultiplexage du deuxième signal numérique de multiplexage de liaison descendante effectué pour obtenir des symboles OFDM de liaison descendante pour chaque CPE des CPE multiples comprend l'opération consistant à : extraire les symboles OFDM de liaison descendante de chaque CPE depuis le deuxième signal numérique de multiplexage de liaison descendante sur la sous-porteuse prédéfinie de l'intervalle de temps de symboles correspondant à chaque CPE.

5. Procédé selon l'une quelconque des revendications 1 à 4, dans lequel l'envoi du signal analogique de liaison descendante de chaque CPE à chaque CPE sur un canal électrique de liaison descendante correspondant à chaque CPE comprend l'opération consistant à :
envoyer le signal analogique de liaison descendante de chaque CPE à chaque CPE sur le canal électrique de liaison descendante correspondant à chaque CPE afin que chaque CPE effectue une démodulation OFDM sur le signal analogique de liaison descendante pour récupérer les données de liaison descendante envoyées par l'OLT, chaque CPE, lorsqu'il effectue la démodulation OFDM, effectuant une compensation d'atténuation et une compensation de phase, le canal optique de liaison descendante et le canal électrique de liaison descendante correspondant étant considérés comme un tout.

6. Procédé selon l'une quelconque des revendications 1 à 5, le procédé comprenant également : avant que le signal analogique de liaison descendante de chaque CPE ne soit envoyé à chaque CPE sur un canal électrique de liaison descendante correspondant à chaque CPE, l'opération consistant à :
effectuer un filtrage et/ou une adaptation de puissance sur le signal OFDM de liaison descendante de chaque CPE et/ou le signal analogique de liaison descendante de chaque CPE.

7. Procédé selon l'une quelconque des revendications 1 à 6, comprenant également les opérations consistant à :
recevoir un signal analogique de liaison montante envoyé par chaque CPE sur un canal électrique de liaison montante, le signal analogique de liaison montante de chaque CPE étant obtenu par une modulation OFDM et une conversion numérique-analogique effectuée par chaque CPE sur les données de liaison montante envoyées à l'OLT ; et
effectuer une conversion analogique-numérique sur le signal analogique de liaison montante de chaque CPE pour obtenir des symboles OFDM de liaison montante de chaque CPE, multiplexer les symboles OFDM de liaison montante de chaque CPE pour obtenir un premier signal numérique de multiplexage de liaison montante, effectuer une conversion numérique-analogique et une conversion électrique-optique pour obtenir un signal optique de liaison montante, et envoyer le signal optique de liaison montante à l'OLT sur un canal optique de liaison montante, afin que l'OLT effectue une conversion optique-électrique et une conversion analogique-numérique sur le signal optique de liaison montante pour obtenir un deuxième signal numérique de multiplexage de liaison montante, et effectuer un démultiplexage et une démodulation OFDM sur le deuxième signal numérique de multiplexage de liaison montante pour obtenir les données de liaison montante envoyées par chaque CPE.

8. Procédé selon la revendication 7, dans lequel :
le multiplexage des symboles OFDM de liaison montante de chaque CPE effectué pour obtenir un premier signal numérique de multiplexage de liaison montante comprend l'opération consistant à : multiplexer les symboles OFDM de liaison montante de chaque CPE sur un intervalle de temps de symboles correspondant à chaque CPE pour obtenir le premier signal numérique de multiplexage de liaison montante, de telle façon que des CPE différents correspondent à des intervalles de temps de symboles différents ; et
l'envoi du signal optique de liaison montante à l'OLT sur un canal optique de liaison montante comprend l'opération consistant à : envoyer le signal optique de liaison montante à l'OLT sur le canal optique de liaison montante, afin que l'OLT effectue une conversion optique-électrique et une conversion analogique-numérique sur le signal optique de liaison montante pour obtenir un deuxième signal numérique de multiplexage de liaison montante, et effectue un démultiplexage et une démodulation OFDM sur le deuxième signal numérique de multiplexage de liaison montante pour obtenir les données de liaison montante envoyées par chaque CPE, afin de récupérer les données de liaison montante de chaque CPE dans l'intervalle de temps de symboles correspondant à chaque CPE.

9. Procédé selon la revendication 7, dans lequel :
le multiplexage des symboles OFDM de liaison montante de chaque CPE effectué pour obtenir un premier signal numérique de multiplexage de liaison montante comprend l'opération consistant à : multiplexer les symboles OFDM de liaison montante de chaque CPE sur une sous-porteuse correspondant à chaque CPE pour obtenir le premier signal numérique de multiplexage de liaison montante, de telle façon que des CPE différents correspondent à des sous-porteuses différentes ; et
l'envoi du signal optique de liaison montante à l'OLT sur un canal optique de liaison montante comprend l'opération consistant à : envoyer le signal optique de liaison montante à l'OLT sur le canal optique de liaison montante, afin que l'OLT effectue une conversion optique-électrique et une conversion analogique-numérique sur le signal optique de liaison montante pour obtenir un deuxième signal numérique de multiplexage de liaison montante, et effectue un démultiplexage et une démodulation OFDM sur le deuxième signal numérique de multiplexage de liaison montante pour obtenir les données de liaison montante envoyées par chaque CPE, afin de récupérer les données de liaison montante de chaque CPE sur la sous-porteuse correspondant à chaque CPE.

10. Procédé selon la revendication 7, dans lequel :
le multiplexage des symboles OFDM de liaison montante de chaque CPE effectué pour obtenir un premier signal numérique de multiplexage de liaison montante comprend l'opération consistant à : multiplexer les symboles OFDM de liaison montante de chaque CPE sur une sous-porteuse prédéfinie dans un intervalle de temps de symboles correspondant pour obtenir le premier signal numérique de multiplexage de liaison montante, de telle façon que des intervalles de temps de symboles correspondant à des CPE différents soient différents et/ou que des sous-porteuses prédéfinies dans des intervalles de temps de symboles correspondant à des CPE différents soient différentes ; et
l'envoi du signal optique de liaison montante à l'OLT sur un canal optique de liaison montante comprend l'opération consistant à : envoyer le signal optique de liaison montante à l'OLT sur le canal optique de liaison montante, afin que l'OLT effectue une conversion optique-électrique et une conversion analogique-numérique sur le signal optique de liaison montante pour obtenir un deuxième signal numérique de multiplexage de liaison montante, et effectue un démultiplexage et une démodulation OFDM sur le deuxième signal numérique de multiplexage de liaison montante pour obtenir les données de liaison montante envoyées par chaque CPE, afin de récupérer les données de liaison montante de chaque CPE sur la sous-porteuse prédéfinie dans l'intervalle de temps de symboles correspondant à chaque CPE.

11. Dispositif de réseau (500), comprenant une interface optique/électrique (510), un convertisseur analogique-numérique de liaison descendante (520), une unité centrale de traitement (530), des convertisseurs numérique-analogique (540) multiples et des circuits analogiques (550) multiples qui sont en relation biunivoque avec les convertisseurs numérique-analogique multiples et qui sont en relation biunivoque avec des premiers dispositifs multiples, dans lequel :
l'interface optique/électrique est conçue pour recevoir un signal optique de liaison descendante d'un canal optique de liaison descendante ;
le convertisseur analogique-numérique de liaison descendante est conçu pour effectuer une conversion analogique-numérique sur le signal optique de liaison descendante reçu par l'interface optique/électrique pour obtenir un deuxième signal numérique de multiplexage de liaison descendante ;
l'unité centrale de traitement est conçue pour démultiplexer le deuxième signal numérique de multiplexage de liaison descendante pour obtenir des symboles OFDM de liaison descendante pour chaque premier dispositif des premiers dispositifs multiples, et envoyer les symboles OFDM de liaison descendante de chaque premier dispositif aux convertisseurs numérique-analogique correspondant aux premiers dispositifs des convertisseurs numérique-analogique de liaison descendante multiples ; et
chaque convertisseur numérique-analogique des convertisseurs numérique-analogique multiples est conçu pour effectuer une conversion numérique-analogique sur les symboles OFDM de liaison descendante correspondant à chaque premier dispositif des premiers dispositifs multiples, et envoyer à chaque premier dispositif les symboles OFDM de liaison descendante correspondant à chaque premier dispositif sur un circuit analogique correspondant à chaque premier dispositif des circuits analogiques multiples.

12. Dispositif de réseau selon la revendication 11, dans lequel l'unité centrale de traitement est spécifiquement conçue pour :
extraire les symboles OFDM de liaison descendante de chaque premier dispositif depuis le deuxième signal numérique de multiplexage de liaison descendante dans un intervalle de temps de symboles correspondant à chaque premier dispositif, de telle façon que des premiers dispositifs différents correspondent à des intervalles de temps de symboles différents ; ou
extraire des symboles OFDM de liaison descendante de chaque premier dispositif depuis le deuxième signal numérique de multiplexage de liaison descendante sur une sous-porteuse correspondant à chaque premier dispositif, de telle façon que des premiers dispositifs différents correspondent à des sous-porteuses différentes ; ou
extraire des symboles OFDM de liaison descendante de chaque premier dispositif depuis le deuxième signal numérique de multiplexage de liaison descendante sur une sous-porteuse prédéfinie dans un intervalle de temps de symboles correspondant à chaque premier dispositif, de telle façon que des intervalles de temps de symboles correspondant à des premiers dispositifs différents soient différents et/ou que des sous-porteuses prédéfinies dans des intervalles de temps de symboles correspondant à des premiers dispositifs différents soient différentes.

13. Dispositif de réseau selon la revendication 11 ou 12, dans lequel l'unité centrale de traitement est également conçue pour effectuer un filtrage et/ou une adaptation de puissance sur le signal OFDM de liaison descendante de chaque premier dispositif ; ou chaque circuit analogique des circuits analogiques multiples est également conçu pour effectuer un filtrage et/ou une adaptation de puissance sur le signal analogique de liaison descendante d'un premier dispositif correspondant des premiers dispositifs multiples.

14. Dispositif de réseau selon l'une quelconque des revendications 11 à 13, dans lequel le dispositif de réseau comprend également un convertisseur numérique-analogique de liaison montante et des convertisseurs analogique-numérique de liaison montante multiples qui sont en relation biunivoque avec les circuits analogiques multiples, dans lequel :
chaque circuit analogique des circuits analogiques multiples est conçu pour recevoir un signal analogique de liaison montante envoyé par un premier dispositif correspondant des premiers dispositifs multiples sur un canal électrique de liaison montante, et envoyer le signal analogique de liaison montante de chaque premier dispositif des premiers dispositifs multiples à un convertisseur analogique-numérique correspondant des convertisseurs analogique-numérique multiples ;
chaque convertisseur analogique-numérique des convertisseurs analogique-numérique multiples est conçu pour effectuer une conversion analogique-numérique sur le signal analogique de liaison montante envoyé par un circuit analogique correspondant des circuits analogiques multiples, pour obtenir les symboles OFDM de liaison montante issus de chaque premier dispositif des premiers dispositifs multiples, et envoyer les symboles OFDM de liaison montante entre chaque premier dispositif et l'unité centrale de traitement ;
l'unité centrale de traitement est conçue pour multiplexer les symboles OFDM de liaison montante issus de chaque premier dispositif pour obtenir un premier signal numérique de multiplexage de liaison montante, et envoyer le premier signal numérique de multiplexage de liaison montante au convertisseur numérique-analogique de liaison montante ;
le convertisseur numérique-analogique de liaison montante est conçu pour effectuer une conversion numérique-analogique sur le premier signal numérique de multiplexage de liaison montante pour obtenir un signal analogique de multiplexage de liaison montante ; et
l'interface optique/électrique est conçue pour effectuer une conversion électrique-optique sur le signal analogique de multiplexage de liaison montante pour obtenir un signal optique de liaison montante, et envoyer le signal optique de liaison montante sur un canal optique de liaison montante.
